# EUROPEAN PATENT APPLICATION

(11) **EP 4 542 929 A1**
(43) Date of publication of application: **23.04.2025**
(21) Application number: 23838791.4
(22) Date of filing: 30.06.2023
(51) Int. Cl.: H04L 9/40, H04W 12/03

(54) **COMMUNICATION METHOD, COMMUNICATION APPARATUS, AND COMMUNICATION SYSTEM**

(30) Priority: 13.07.2022 CN 202210821767
(71) Applicant: Huawei Technologies Co., Ltd., Shenzhen, Guangdong 518129 (CN)
(72) Inventor: ZHU, Jintao, Shenzhen, Guangdong 518129 (CN); LI, Fei, Shenzhen, Guangdong 518129 (CN); DING, Hui, Shenzhen, Guangdong 518129 (CN)
(74) Representative: Körber, Martin Hans
(86) International application number: PCT/CN2023/105370
(87) International publication number: WO 2024/012299

(57) **Abstract**

This application provides a communication method, a communication apparatus, and a communication system. The method includes: obtaining a security policy corresponding to a quality of service flow identifier (QoS flow identifier, QFI), where the security policy includes an integrity protection policy and/or a confidentiality protection policy; and performing, according to the security policy, security protection on a first data radio bearer (data radio bearer, DRB) corresponding to the QFI. According to the technical solutions provided in this application, data security protection on a user plane at a QoS flow/DRB granularity can be implemented, to meet security requirements of different types of services, and improve accuracy of the data security protection.

## Description

This application claims priority to Chinese Patent Application NO. 202210821767.5, filed with the China National Intellectual Property Administration on July 13, 2022 and entitled "COMMUNICATION METHOD, COMMUNICATION APPARATUS, AND COMMUNICATION SYSTEM", which is incorporated herein by reference in its entirety.

### TECHNICAL FIELD

This application relates to the field of wireless communication technologies, and in particular, to a communication method, a communication apparatus, and a communication system.

### BACKGROUND

In a mobile communication system, to ensure security of service data transmission, in a protocol data unit (protocol data unit, PDU) session establishment process, a session management function (session management function, SMF) network element may provide a user plane (user plane, UP) security policy for a PDU session. The UP security policy may indicate whether to activate UP confidentiality protection and/or UP integrity protection for all data radio bearers (data radio bearers, DRBs) belonging to the PDU session.

A 5th generation (5th Generation, 5G) mobile network is characterized by low latency, high reliability, wide coverage, and the like, and has a wide application prospect in a plurality of fields such as an industrial field based on technologies such as artificial intelligence and end-to-end network slicing. When 5G is applied to an industrial field network, an industrial equipment on which a service message and a function security message coexist has a high requirement on data security protection due to differences in performance and importance of different messages.

### SUMMARY

Embodiments of this application provide a communication method, a communication apparatus, and a communication system, so that data security protection on a user plane at a QoS flow/DRB granularity can be implemented, to meet security requirements of different types of services, and improve accuracy of the data security protection.

According to a first aspect, this application discloses a communication method. The communication method may be applied to an access network device, may be applied to a module (for example, a chip or a processor) in the access network device, or may be applied to a logical module or software that can implement all or some functions of the access network device. The following provides descriptions by using an example in which an execution body is the access network device. The communication method may include: obtaining, by the access network device, a security policy corresponding to a quality of service flow identifier (quality of service flow identifier, QFI), where the security policy includes an integrity protection policy and/or a confidentiality protection policy; and performing, according to the security policy, security protection on a first DRB corresponding to the QFI.

In embodiments of this application, security policy control on a user plane session at a QoS flow/DRB granularity can be implemented. Different security policies are associated with specific QoS flows, and mapping between a QoS flow and a DRB is implemented, so that different security policies can be executed for different QoS flows/DRBs, and security protection based on the QoS flow/DRB is implemented, to meet security requirements of different types of services. Accuracy of service data security protection can be improved in this case, compared with that in a case in which a same security policy is used for all QoS flows/DRBs at a PDU session granularity.

In a possible implementation, the obtaining a security policy corresponding to a QFI includes: receiving the security policy corresponding to the QFI from an SMF network element.

In embodiments of this application, the access network device obtains the security policy corresponding to the QFI. In a possible implementation, the SMF network element sends the security policy corresponding to the QFI to the access network device, so that the access network device can obtain the security policy corresponding to the QFI.

In a possible implementation, the obtaining a security policy corresponding to a QFI includes: obtaining QoS attribute indication information corresponding to the QFI, where the QoS attribute indication information indicates quality of service guarantee used for a data flow; obtaining the security policy corresponding to the QoS attribute indication information; and determining, based on the QoS attribute indication information corresponding to the QFI and the security policy corresponding to the QoS attribute indication information, the security policy corresponding to the QFI.

In embodiments of this application, the access network device obtains the security policy corresponding to the QFI. In a possible implementation, the access network device first obtains the QoS attribute indication information corresponding to the QFI, and then obtains the security policy corresponding to the QoS attribute indication information, so that the access network device can determine, based on the QoS attribute indication information corresponding to the QFI and the security policy corresponding to the QoS attribute indication information, that the security policy corresponding to the QFI is obtained.

In a possible implementation, the obtaining a security policy corresponding to a QFI includes: receiving QoS attribute indication information corresponding to the QFI from an SMF network element, where the QoS attribute indication information indicates quality of service used for a data flow; receiving the security policy corresponding to the QoS attribute indication information from an application function (application function, AF) network element; and determining, based on the QoS attribute indication information corresponding to the QFI and the security policy corresponding to the QoS attribute indication information, the security policy corresponding to the QFI.

In embodiments of this application, the access network device may obtain, from the SMF network element, the QoS attribute indication information corresponding to the QFI, and obtain, from the AF network element, the security policy corresponding to the QoS attribute indication information. In embodiments of this application, only the SMF network element and the AF network element are used as an example for description. The access network device may further obtain, from another network element, the QoS attribute indication information corresponding to the QFI and the security policy corresponding to the QoS attribute indication information. This is not limited in embodiments of this application.

In a possible implementation, the communication method may further include: The access network device sends indication information to a terminal device according to the security policy, where the indication information indicates to perform security protection on the first DRB.

In embodiments of this application, the access network device sends the indication information to the terminal device, so that the terminal device can perform security protection on the first DRB based on the indication information. This may be understood as that the access network device may perform security protection on a data packet carried on the first DRB. This may also be understood as that the DRB supports the security policy corresponding to the QFI. The security protection may include integrity protection and/or confidentiality protection. Therefore, data security protection at the DRB granularity can be implemented, to meet the security requirements of different types of services, and improve the accuracy of the data security protection.

In a possible implementation, the performing, according to the security policy, security protection on a first DRB corresponding to the QFI includes: The access network device receives a first data packet from the terminal device on the first DRB; and performs the security protection on the first data packet according to the security policy.

In embodiments of this application, when the terminal device needs to send an uplink data packet, for example, the first data packet, to the access network device, the terminal device may first determine the QFI of the first data packet, then determine, based on a correspondence between a QFI and a DRB, the first DRB corresponding to the QFI, and send the first data packet to the access network device on the first DRB. The access network device may determine the corresponding security policy based on the first DRB, and then perform security protection on the first data packet according to the corresponding security policy. Therefore, the data security protection at the DRB granularity can be implemented, to meet the security requirements of different types of services, and improve the accuracy of the data security protection.

In a possible implementation, the communication method may further include: determining the security policy based on the QFI included in the first data packet.

In embodiments of this application, after determining the QFI of the first data packet, optionally, the terminal device may further store a label of the QFI in a packet header of the data packet, so that the access network device may determine, based on the QFI in the packet header of the first data packet, the security policy corresponding to the QFI, and perform security protection on the first data packet according to the corresponding security policy. Therefore, the data security protection at the QoS flow granularity can be implemented, to meet the security requirements of different types of services, and improve the accuracy of the data security protection.

In a possible implementation, the communication method may further include: The access network device sends the first data packet to a user plane function (user plane function, UPF) network element through a quality of service (quality of service, QoS) flow (QoS Flow) corresponding to the QFI.

In embodiments of this application, after performing security protection on the first data packet, the access network device may send the first data packet to the UPF network element, to implement uplink data transmission on a user plane.

In a possible implementation, the performing, according to the security policy, security protection on a first DRB corresponding to the QFI includes: The access network device receives a second data packet from the UPF network element through the QoS flow corresponding to the QFI; performs security protection on the second data packet according to the security policy; and sends the second data packet to the terminal device on the first DRB.

In embodiments of this application, when the UPF network element needs to send the second data packet to the access network device, the UPF network element may determine the QFI of the second data packet, and send the second data packet to the access network device through the QoS flow corresponding to the QFI. After receiving the second data packet, the access network device may perform security protection on the second data packet according to the security policy corresponding to the QFI. After performing security protection on the second data packet, the access network device may send a second data packet to the terminal device, to implement downlink data transmission on the user plane. Therefore, the data security protection at the QoS flow granularity can be implemented, to meet the security requirements of different types of services, and improve the accuracy of the data security protection.

In a possible implementation, the security policy is supported by the first DRB.

In a possible implementation, the communication method may further include: determining the first DRB from a created DRB, or creating the first DRB.

In embodiments of this application, before receiving the first data packet from the terminal device on the first DRB or sending the second data packet to the terminal device on the first DRB, the access network device may first determine the first DRB. In a possible implementation, a DRB supporting the security policy corresponding to the QFI is determined from the created DRB. In another possible implementation, a new DRB that supports the security policy corresponding to the QFI is created. Optionally, the access network device may correspondingly associate the QFI and the DRB with the security policy, so that the data security protection on the user plane at the QoS flow/DRB granularity can be implemented, to meet the security requirements of different types of services, and improve the accuracy of the data security protection.

According to a second aspect, this application discloses a communication method. The communication method may be applied to a terminal device, may be applied to a module (for example, a chip or a processor) in the terminal device, or may be applied to a logical module or software that can implement all or some functions of the terminal device. The following provides descriptions by using an example in which an execution body is the terminal device. The communication method may include: receiving, by the terminal device, indication information from an access network device, where the indication information indicates to perform security protection on a first DRB, and the security protection includes integrity protection and/or confidentiality protection; and performing security protection on the first DRB based on the indication information.

In embodiments of this application, security policy control on a user plane session at a QoS flow/DRB granularity can be implemented. Different security policies are associated with specific QoS flows, and mapping between a QoS flow and a DRB is implemented, so that different security policies can be executed for different QoS flows/DRBs, and security protection based on the QoS flow/DRB is implemented, to meet security requirements of different types of services. Accuracy of service data security protection can be improved in this case, compared with that in a case in which a same security policy is used for all QoS flows/DRBs at a PDU session granularity.

It should be understood that the execution body of the second aspect may be the terminal device, and specific content of the second aspect corresponds to the content of the first aspect. For corresponding features of the second aspect and beneficial effects achieved by the second aspect, refer to the descriptions of the first aspect. To avoid repetition, detailed descriptions are properly omitted herein.

In a possible implementation, the performing security protection on the first DRB based on the indication information includes: The terminal device performs security protection on a first data packet based on the indication information; and sends, to the access network device on the first DRB, the first data packet on which the security protection is performed.

In a possible implementation, the performing security protection on the first DRB based on the indication information includes: The terminal device receives a second data packet from the access network device on the first DRB; and performs security protection on the second data packet based on the indication information.

According to a third aspect, this application discloses a communication method. The communication method may be applied to an SMF network element, may be applied to a module (for example, a chip or a processor) in the SMF network element, or may be applied to a logical module or software that can implement all or some functions of the SMF network element. The following provides descriptions by using an example in which an execution body is the SMF network element. The communication method may include: obtaining, by the SMF network element, a security policy corresponding to a QFI of a QoS flow; and sending, to an access network device, the security policy corresponding to the QFI of the QoS flow.

In embodiments of this application, security policy control on a user plane session at a QoS flow/DRB granularity can be implemented. Different security policies are associated with specific QoS flows, and mapping between a QoS flow and a DRB is implemented, so that different security policies can be executed for different QoS flows/DRBs, and security protection based on the QoS flow/DRB is implemented, to meet security requirements of different types of services. Accuracy of service data security protection can be improved in this case, compared with that in a case in which a same security policy is used for all QoS flows/DRBs at a PDU session granularity.

It should be understood that the execution body of the third aspect may be the SMF network element, and specific content of the third aspect corresponds to the content of the first aspect. For corresponding features of the third aspect and beneficial effects achieved by the third aspect, refer to the descriptions of the first aspect. To avoid repetition, detailed descriptions are properly omitted herein.

In a possible implementation, the obtaining, by the SMF network element, a security policy corresponding to a QFI of a QoS flow includes: receiving, by the SMF network element, a policy and charging control (policy and charging control, PCC) rule (PCC rule) from a policy control function (policy control function, PCF) network element, where the PCC rule includes QoS attribute indication information and a security policy, and the security policy includes an integrity protection policy and/or a confidentiality protection policy; associating the PCC rule with the QoS flow based on the QoS attribute indication information and the security policy; and obtaining, based on the PCC rule and the QoS flow associated with the PCC rule, the security policy corresponding to the QFI of the QoS flow.

In a possible implementation, the associating the PCC rule with the QoS flow based on the QoS attribute indication information and the security policy includes: determining, from a created QoS flow, the QoS flow supporting the QoS attribute indication information and the security policy, or creating the QoS flow that supports the QoS attribute indication information and the security policy; and associating the PCC rule with the QoS flow.

According to a fourth aspect, an embodiment of this application provides a communication apparatus. The communication apparatus may be used in an access network device, may be used in a module (for example, a chip or a processor) in the access network device, or may be used in a logical module or software that can implement all or some functions of the access network device.

The communication apparatus has a functional unit for implementing the behavior in the method instance in the first aspect. The function may be implemented by hardware, or may be implemented by hardware executing corresponding software. The hardware or the software includes one or more modules corresponding to the foregoing function. For beneficial effects, refer to descriptions of the first aspect. Details are not described herein again.

According to a fifth aspect, an embodiment of this application provides a communication apparatus. The communication apparatus may be used in a terminal device, may be used in a module (for example, a chip or a processor) in the terminal device, or may be used in a logical module or software that can implement all or some functions of the terminal device.

The communication apparatus has a functional unit for implementing the behavior in the method instance in the second aspect. The function may be implemented by hardware, or may be implemented by hardware executing corresponding software. The hardware or the software includes one or more modules corresponding to the foregoing function. For beneficial effects, refer to descriptions of the second aspect. Details are not described herein again.

According to a sixth aspect, an embodiment of this application provides a communication apparatus. The communication apparatus may be used in an SMF network element, may be used in a module (for example, a chip or a processor) in the SMF network element, or may be used in a logical module or software that can implement all or some functions of the SMF network element.

The communication apparatus has a functional unit for implementing the behavior in the method instance in the fifth aspect. The function may be implemented by hardware, or may be implemented by hardware executing corresponding software. The hardware or the software includes one or more modules corresponding to the foregoing function. For beneficial effects, refer to descriptions of the third aspect. Details are not described herein again.

According to a seventh aspect, a communication apparatus is provided. The communication apparatus may be the access network device in the foregoing method embodiments, or may be a chip or a processor disposed in the access network device. The communication apparatus may include a processor. The processor is coupled to a memory. The memory is configured to store a program or instructions. When the program or the instructions are executed by the processor, the communication apparatus is enabled to perform the method performed by the access network device, or the chip or the processor in the access network device in the foregoing method embodiments.

According to an eighth aspect, a communication apparatus is provided. The communication apparatus may be the terminal device in the foregoing method embodiments, or may be a chip or a processor disposed in the terminal device. The communication apparatus may include a processor. The processor is coupled to a memory. The memory is configured to store a program or instructions. When the program or the instructions are executed by the processor, the communication apparatus is enabled to perform the method performed by the terminal device, or the chip or the processor in the terminal device in the foregoing method embodiments.

According to a ninth aspect, a communication apparatus is provided. The communication apparatus may be the SMF network element in the foregoing method embodiments, or may be a chip or a processor disposed in the SMF network element. The communication apparatus includes a processor. The processor is coupled to a memory. The memory is configured to store a program or instructions. When the program or the instructions are executed by the processor, the communication apparatus is enabled to perform the method performed by the SMF network element, or the chip or the processor in the SMF network element in the foregoing method embodiments.

According to a tenth aspect, this application provides a computer-readable storage medium. The computer-readable storage medium stores computer instructions, and when a computer program or the computer instructions are run, the foregoing methods are performed.

According to an eleventh aspect, this application provides a computer program product including executable instructions. When the computer program product runs on user equipment, the foregoing methods are performed.

According to a twelfth aspect, this application provides a communication system. The system includes one or more devices of a terminal device, an access network device, an SMF network element, and/or a UPF network element.

According to a thirteenth aspect, this application provides a chip system. The chip system includes a processor, configured to implement the functions in the foregoing methods. In a possible implementation, the chip system may further include a memory, configured to store program instructions and/or data. The chip system may include a chip, or may include a chip and another discrete component.

### BRIEF DESCRIPTION OF DRAWINGS

To describe the technical solutions in embodiments of this application more clearly, the following briefly describes the accompanying drawings for describing embodiments.
FIG. 1 is a diagram of a network architecture according to an embodiment of this application;
FIG. 2 is a diagram of a PDU session, a DRB, and a QoS flow according to an embodiment of this application;
FIG. 3 is a schematic flowchart of a communication method according to an embodiment of this application;
FIG. 4A and FIG. 4B is an interaction diagram of another communication method according to an embodiment of this application;
FIG. 5A and FIG. 5B is an interaction diagram of still another communication method according to an embodiment of this application;
FIG. 6 is a diagram of a structure of a communication apparatus according to an embodiment of this application;
FIG. 7 is a diagram of a structure of another communication apparatus according to an embodiment of this application;
FIG. 8 is a diagram of a structure of still another communication apparatus according to an embodiment of this application;
FIG. 9 is a diagram of a structure of still another communication apparatus according to an embodiment of this application; and
FIG. 10 is a diagram of a structure of a terminal device according to an embodiment of this application.

### DESCRIPTION OF EMBODIMENTS

In descriptions of this application, unless otherwise specified, "/" means "or". For example, A/B may mean A or B. In this application, "and/or" describes only an association relationship between associated objects and represents that three relationships may exist. For example, A and/or B may represent the following three cases: Only A exists, both A and B exist, and only B exists. In addition, "at least one" may mean one or more, and "a plurality of" may mean two or more. Terms such as "first" and "second" do not limit a quantity and an execution sequence, and the terms such as "first" and "second" do not indicate a definite difference.

It should be noted that, in this application, terms such as "example" or "for example" are used for representing giving an example, an illustration, or a description. Any embodiment or design scheme described as an "example" or "for example" in this application should not be understood as being more preferred or having more advantages than another embodiment or design scheme. To be precise, use of the word like "example" or "for example" is intended to present a relative concept in a specific manner.

In the descriptions of this application, "indication" may include a direct indication and an indirect indication, or may include an explicit indication and an implicit indication. Information indicated by a piece of information (for example, indication information described below) is referred to as to-be-indicated information. In a specific implementation process, there are a plurality of manners for indicating the to-be-indicated information. For example, the to-be-indicated information may be directly indicated. For example, the to-be-indicated information, an index of the to-be-indicated information, or the like is indicated. For another example, the to-be-indicated information may alternatively be indirectly indicated by indicating other information, and there is an association relationship between the indicated other information and the to-be-indicated information. For another example, only a part of the to-be-indicated information may alternatively be indicated, and another part of the to-be-indicated information is known or pre-agreed on. In addition, particular information may further be indicated based on a pre-agreed (for example, protocol specified) arrangement order of all information to reduce indication overheads to some extent.

To better understand a communication method provided in this application, a network architecture to which embodiments of this application are applied are first described below.

The technical solution in embodiments of this application may be applied to various communication systems, for example, a global system for mobile communication (global system for mobile communication, GSM), a code division multiple access (code division multiple access, CDMA) system, a wideband code multiple access (wideband code division multiple access, WCDMA) system, a general packet radio service (general packet radio service, GPRS), a long term evolution (long term evolution, LTE) system, an LTE frequency division duplex (frequency division duplex, FDD) system, an LTE time division duplex (time division duplex, TDD) system, a universal mobile telecommunications system (universal mobile telecommunications system, UMTS), an enhanced data rate for GSM evolution (enhanced data rate for GSM evolution, EDGE) system, and a worldwide interoperability for microwave access (worldwide interoperability for microwave access, WiMAX) system. The technical solution in this embodiment of this application may further be applied to another communication system, for example, a public land mobile network (public land mobile network, PLMN) system, an advanced long term evolution (LTE advanced, LTE-A) system, a 5G system, an NR system, a machine to machine (machine to machine, M2M) system, or another future evolved communication system. This is not limited in embodiments of this application.

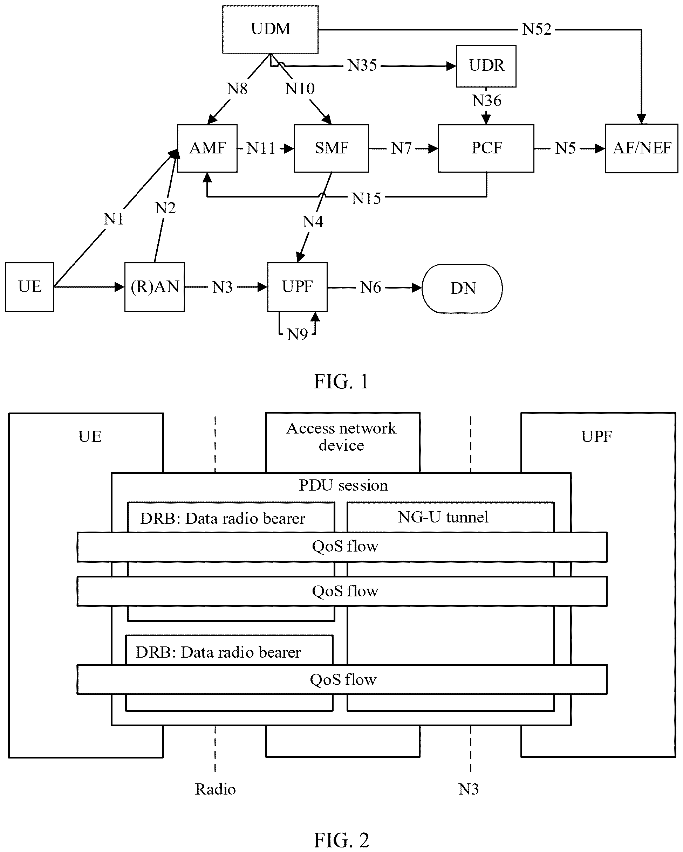

The following describes an example of an application scenario according to an embodiment of this application with reference to FIG. 1. FIG. 1 is a diagram of a network architecture according to an embodiment of this application. As shown in FIG. 1, the network architecture may be, for example, a non-roaming (non-roaming) architecture. The network architecture may include the following devices, network elements, and networks.
1. A terminal device may be referred to as a user equipment (UE), a terminal, an access terminal, a subscriber unit, a subscriber station, a mobile station, a remote station, a remote terminal, a mobile device, a wireless communication device, a terminal agent, a terminal apparatus, or the like. The UE may alternatively be a cellular phone, a cordless phone, a session initiation protocol (session initiation protocol, SIP) phone, a wireless local loop (wireless local loop, WLL) station, a personal digital assistant (personal digital assistant, PDA), a handheld device with a wireless communication function, a computing device, another processing device connected to a wireless modem, a vehicle-mounted device, a wearable device, a terminal device in a future 6G network, or a terminal device in a future evolved public land mobile network (public land mobile network, PLMN), or may be a terminal device, a logical entity, or an intelligent device such as a mobile phone and a smart terminal, such as a virtual reality (virtual reality, VR) terminal device, an augmented reality (augmented reality, AR) terminal device, a wireless terminal in industrial control (industrial control), a wireless terminal in self driving (self driving), a wireless terminal in telemedicine (remote medical), a wireless terminal in a smart grid (smart grid), a wireless terminal in transportation safety (transportation safety), a wireless terminal in a smart city (smart city), a wireless terminal in a smart home (smart home), communication devices such as a server, a gateway, a base station, and a controller, or an internet of things (Internet of things, IoT) device such as a sensor, an electric meter, or a water meter. This is not limited in embodiments of this application. In embodiments of this application, for example, in the industrial field, the terminal device may be a customer premises equipment (customer premises equipment, CPE), and an industrial terminal may be a device that specifically performs an industrial control operation, for example, a temperature sensor or a mechanical arm. Such an industrial terminal usually does not have a 5G access capability, and needs to be connected to a CPE having a 5G capability. In this way, the industrial terminal may indirectly access a 5G network via the CPE. Alternatively, the terminal device may be a collection of an industrial terminal and a CPE that may appear in future evolution, and may be specifically understood as an industrial terminal with a 5G capability, or the like. This is not limited in this application.
2. A (radio) access network (radio access network, RAN) provides a network access function for authorized terminals in a specific area, and can use transmission tunnels with different quality based on levels of the terminals, service requirements, and the like. The access network may be an access network using different access technologies. Currently, there are two types of radio access technologies: a 3^{rd} generation partnership project (3^{rd} Generation Partnership Project, 3GPP) access technology (for example, a radio access technology used in a 4G or 5G system) and a non-3^{rd} generation partnership project (non-3GPP) access technology. The 3GPP access technology is an access technology that complies with the 3GPP standard specification. An access network using the 3GPP access technology is referred to as a RAN, and an access network device in the 5G system is referred to as a next-generation node base station (next generation Node Base station, gNB). The non-3GPP access technology is an access technology that does not comply with the 3GPP standard specification, for example, an air interface technology represented by an access point (access point, AP) in Wi-Fi.

An access network that implements a network access function based on a wireless communication technology may be referred to as a RAN. The RAN can manage a radio resource, provide an access service for the terminal, and forward a control signal and terminal data between the terminal and a core network.

The RAN may be, for example, a base station (NodeB), an evolved base station (evolved NodeB, eNB or eNodeB), a base station (gNB) in a 5G mobile communication system, a base station in a future mobile communication system, or an AP in a Wi-Fi system, or may be a radio controller in a cloud radio access network (cloud radio access network, CRAN) scenario, or the access network device may be a relay station, an access point, a vehicle-mounted device, a wearable device, a network device in a future 6G network, a network device in a future evolved PLMN network, or the like. A specific technology and a specific device form that are used for the radio access network device are not limited in embodiments of this application.
3. An access and mobility management function (access and mobility management function, AMF) entity is mainly used for mobility management, access management, and the like, and may be used to implement a function other than session management in functions of a mobility management entity (mobility management entity, MME), for example, a function of lawful interception or access authorization/authentication. In embodiments of this application, the access and mobility management function entity may be configured to implement a function of an access and mobility management network element.
4. A session management function (session management function, SMF) entity is mainly configured to: manage a session, allocate and manage an internet protocol (internet protocol, IP) address of a terminal device, select and manage a termination point of a user plane function, policy control, and a charging function interface, notify downlink data, and the like. In embodiments of this application, the session management function entity may be configured to implement a function of a session management network element.
5. A user plane (user plane function, UPF) entity is a data plane gateway. The user plane functional entity may be configured to: perform packet routing and forwarding, perform quality of service (quality of service, QoS) processing on user plane data, or the like. User data may access a data network (data network, DN) via this network element. In embodiments of this application, the user plane functional entity may be configured to implement a function of a user plane network element.
6. A data network (data network, DN) is a network for providing transmitted data. For example, an operator service network, an internet (Internet), or a third-party service network.
7. A network exposure (network exposure function, NEF) entity is configured to securely expose, to the outside, a service, a capability, and the like that are provided by a 3GPP network function.
8. A policy control function (policy control function, PCF) entity is responsible for performing policy control functions such as session-level or service flow-level charging, QoS bandwidth guarantee, mobility management, and terminal device policy decision. In this architecture, PCFs connected to an AMF and an SMF respectively correspond to an AM PCF (PCF for Access and Mobility Control) and an AM PCF (PCF for Session Management), and may not be a same PCF entity in an actual deployment scenario.
9. A unified data management (unified data management, UDM) entity is configured to: process a terminal device identifier, access authentication, registration, mobility subscription management, and the like.
10. An application function (application function, AF) entity is configured to: perform application-affected data routing, access a network exposure function network element, interact with a policy framework for policy control, and the like. An AF network element may transfer a requirement of an application side on a network side, for example, a QoS requirement or user status event subscription. When interacting with a core network, the AF network element, as an application functional entity, may further be authorized by the NEF, for example, directly send a request message to the NEF, and the NEF determines whether the AF is allowed to send the request message. If verification succeeds, the NEF forwards the request message to a corresponding PCF or UDM.
11. A unified data repository (Unified Data Repository, UDR) entity is for a unified data repository function. The UDR entity is mainly responsible for functions of storage and retrieval of subscription data, policy data, application data, and another type of data.

In the network architecture, N1 is an interface between the AMF entity and the UE, and is configured to transfer a QoS rule and the like to the UE. N2 is an interface between the AMF entity and the RAN, and is configured to transfer radio bearer control information and the like from a core network side to the RAN. N3 is an interface between the RAN and the UPF entity, and is configured to transmit user plane data and the like. N4 is an interface between the SMF entity and the UPF entity, and is configured to transmit information between a control plane and a user plane, including delivery of a forwarding rule, a QoS rule, a traffic statistics rule, and the like from the control plane to the user plane and reporting of information on the user plane. N5 is an interface between the AF entity and the PCF entity, and is configured to deliver an application service request and report a network event. N6 is an interface between the UPF entity and a DN entity, and is configured to transmit user plane data and the like. N7 is an interface between the PCF entity and the SMF entity, and is configured to deliver a PDU session granularity and a service data flow granularity control policy. N8 is an interface between the AMF entity and the UDM entity, and is used by the AMF entity to obtain access and mobility management related subscription data and authentication data from the UDM entity, and is used by the AMF entity to register current mobility management related information of the UE with the UDM entity, and the like. N10 is an interface between the SMF entity and the UDM entity, and is used by the SMF entity to obtain session management related subscription data from the UDM entity, and is used by the SMF entity to register current session related information of the UE with the UDM entity. N11 is an interface between the SMF entity and the AMF entity, and is configured to: transfer PDU session tunnel information between the RAN and the UPF entity, transfer a control message to be sent to the UE, transfer radio resource control information to be sent to the RAN, and the like. N15 is an interface between the PCF entity and the AMF entity, and is configured to deliver a UE policy and an access control related policy. N35 is an interface between the UDM entity and the UDR entity, and is used by the UDM entity to obtain user subscription data information from the UDR entity. N36 is an interface between the PCF entity and the UDR entity, and is used by the PCF entity to obtain policy related subscription data and application data related information from the UDR entity. N52 is an interface between the UDM entity and the NEF entity, and is used by the NEF entity to expose a network capability to a third-party application function. For example, the third-party application function subscribes to a reachability event of all users in a specific group from the UDM entity via the NEF entity. Optionally, the NEF entity further has direct interfaces to both the AMF entity and the SMF entity, and the direct interfaces respectively correspond to an N29 interface and an N51 interface (for simplicity, not shown in FIG. 1), and are configured to expose an operator network capability to a third-party application functional entity. The N29 interface may be used by the NEF entity to directly subscribe to a corresponding network event from the AMF entity and update user configuration information. The N51 interface may be configured to update application configuration data on the SMF entity/UPF entity, for example, PFD packet flow description (Packet Flow Description) information corresponding to an application ID.

A user registration procedure may be understood as that the terminal device sends a registration request to the AMF entity via an AN, the AMF entity obtains the subscription data from a specific UDM entity based on a user identifier, and the UDM entity may obtain actual subscription data from the UDR entity after receiving the request. In addition, the AMF entity may further initiate a user policy control create (UEPolicyControl_Create) request and an access management policy control create (AMPolicyControl_Create) request to the PCF entity, to obtain a terminal device policy and an access control policy. The PCF entity returns the access control policy to the AMF entity in this process, and provides the terminal device policy for the terminal device via the AMF entity. A session establishment procedure may be understood as that the terminal device sends a session establishment request to the AMF entity via the RAN. The AMF entity selects the SMF entity for a session to provide a service for the session, stores a correspondence between the SMF entity and a PDU session, and sends the session establishment request to the SMF entity. The SMF entity selects the corresponding UPF entity for the terminal device, establishes a user plane transmission path, and allocates an IP address to the terminal device. In this process, the SMF entity further initiates a policy control session establishment request to the PCF entity, to establish a policy control session between the SMF entity and the PCF entity. In a policy control session establishment process, the SMF entity stores a correspondence between the policy control session and the PDU session. In addition, the AF entity may further establish an AF session with the PCF entity, and the PCF entity binds the AF session to the policy control session.

It should be understood that the foregoing network architecture applied to embodiments of this application is merely an example of a network architecture described from the perspective of a conventional point-to-point architecture and a service-oriented architecture, and a network architecture applicable to embodiments of this application is not limited thereto. Any network architecture that can implement the functions of the foregoing network elements is applicable to embodiments of this application.

It should be further understood that the AMF entity, the SMF entity, the UPF entity, the DN entity, the NEF entity, the PCF entity, the UDM entity, the AF entity, and the UDR entity shown in FIG. 1 may be understood as network elements configured to implement different functions in the core network, for example, may be combined into a network slice based on a requirement. These core network elements may be independent devices, or may be integrated into a same device to implement different functions. This is not limited in this application.

In the following, for ease of description, an entity for implementing an AMF is denoted as an access and mobility management network element, an entity for implementing an SMF is denoted as a session management function network element, an entity for implementing a UPF is denoted as a user plane network element, an entity for implementing a DN is denoted as a data network element, an entity for implementing an NEF is denoted as a network exposure network element, an entity for implementing a PCF is denoted as a policy control function network element, an entity for implementing a UDM is denoted as a unified data management network element, an entity for implementing an AF is denoted as an application function network element, and an entity for implementing a UDR is denoted as a unified data repository network element. It should be understood that the foregoing names are merely used to distinguish between different functions, and shall not constitute any limitation on this application. This application does not exclude a possibility of using another name in a 6G network and another possible future network. For example, in the 6G network, some or all of the foregoing network elements may still use terms in 5G, or may use other names. A unified description is provided herein, and details are not described below.

It should be further understood that names of interfaces between the foregoing network elements in FIG. 1 are only examples, and the interfaces may have other names during specific implementation. This is not specifically limited in this application. In addition, names of messages (or signaling) transmitted between the foregoing network elements are merely examples, and do not constitute any limitation on functions of the messages.

The following first provides definitions of technical terms that may occur in embodiments of this application. Terms used in implementations of this application are only used to explain specific embodiments of this application, but are not intended to limit this application.

### (1) QoS

To provide different quality of service for different services, a wireless network provides QoS. QoS management is a control mechanism for the wireless network to meet different quality of service requirements. The QoS management is an end-to-end process and requires coordination of all network nodes between a service initiator and a service responder to ensure quality of service. An air interface QoS management feature provides different end-to-end quality of service for various services and different requirements of a user. The QoS management is supported in both NSA (Non-Standalone) networking and SA (Standalone) networking.

Currently, a QoS guarantee mechanism in 5G communication includes a guaranteed bit rate (guaranteed bit rate, GBR) QoS flow (flow) and a non-GBR (Non-GBR) QoS flow.

In a PDU session (session), a QoS flow is a minimum granularity for QoS differentiation. In a 5G system, a QFI is used to identify the QoS flow, and the QFI is unique in a PDU session. In other words, one PDU session may have a plurality of (a maximum of 64) QoS flows, but each QoS flow has a different QFI. In one PDU session, user plane service flows that have a same QFI use a same service forwarding processing manner (for example, scheduling). FIG. 2 is a diagram of a PDU session, a DRB, and a QoS flow according to an embodiment of this application. As shown in FIG. 2, at a configuration granularity, one PDU session may correspond to a plurality of DRBs, and services on a same DRB may also use different service classes, namely, QoS flows. One DRB may further correspond to one or more QoS flows, and a QoS configuration is at a QoS flow level.

In a 5G system (5G system, 5GS), the QoS flow is controlled by an SMF network element in a core network, and may be preconfigured or established and modified through a PDU session. A configuration of one QoS flow may include a PDR of a UPF network element and a QoS profile (profile) of an access network device.

The PDR of the UPF network element may include an uplink PDR and a downlink PDR, and these PDRs are provided by the SMF network element through an N4 interface. For an internet protocol version (internet protocol version, IPv) 4 or IPv6 or IPv4v6 PDU session, the PDR may include CN tunnel information (tunnel info), a network instance (network instance), a QFI, an internet protocol (internet protocol, IP) packet filter set (packet filter set), and an application identifier (application identifier). The CN tunnel information may be a core network address of an N3/N9 tunnel corresponding to the PDU session. The network instance is identification information of a domain, and is used for traffic detection and routing in the UPF network element. The IP packet filter set may include a series of parameters related to IP packet filtering. The application identifier is an index of an application detection rule set configured in the UPF network element. For an Ethernet PDU session, the PDR may include CN tunnel information, a network instance, a QFI, and an Ethernet packet filter set (Ethernet packet filter set). The Ethernet packet filter set may include a series of parameters related to Ethernet packet filtering.

The QoS profile of the access network device may be provided by the SMF network element through an N2 interface between an AMF network element and the access network device, or may be preconfigured. Information included in the QoS profile may be shown in Table 1.

**Table 1 Information included in a QoS profile**

| QoS flow attribute | Description |
|---|---|
| 5G QoS identifier (5G QoS identifier, 5QI) | indicates a radio characteristic of a QoS flow. |
| Allocation and retention priority (allocation and retention priority, ARP) | is a priority of the QoS flow on a next generation (next generation, NG) interface, and can be used between different UEs or between QoS flows on a UE. |
| Reflective QoS attribute (reflective QoS attribute, RQA) | indicates whether an uplink complies with mirroring mapping, and is available only for a non-GBR QoS flow. |
| Guaranteed flow bit rate (guaranteed flow bit rate, GFBR) | is a guaranteed data rate, is available only for a GBR QoS flow, and includes uplink and downlink guaranteed flow bit rates. |
| Maximum flow bit rate (maximum flow bit rate, MFBR) | is a maximum data rate, is available only for the GBR QoS flow, and includes uplink and downlink maximum flow bit rates. |
| Notification control (notification control) | indicates whether an access network performs reporting to a core network when QoS cannot be fulfilled, is available only for the GBR QoS flow, and is optional. |
| Maximum packet loss rate (maximum packet loss rate, MPLR) | indicates a maximum packet loss rate that can be tolerated by a QoS flow, and can be provided only on the GBR QoS flow. |

Whether a QoS flow configured in the QoS profile is a "GBR" QoS flow or a "non-GBR" QoS flow depends on the QoS profile of the QoS flow. A QoS profile of each QoS flow includes the 5QI and the ARP. A QoS profile of each non-GBR QoS flow may further include the RQA. A QoS profile of each GBR QoS flow may further include the GFBR and the MFBR. The QoS configuration of each GBR QoS flow may further include the indication control and the MPLR.

### (2) Security policy

A security policy may include an integrity protection policy and/or a confidentiality protection policy. This may be understood as that the security policy may indicate whether to perform security protection and/or what security protection is to be performed.

Integrity protection: A transmitting end performs integrity protection on a plaintext or a ciphertext based on an integrity protection algorithm and an integrity protection key. A receiving end may perform, based on the same integrity protection algorithm and the same integrity protection key, integrity check on data obtained through the integrity protection.

Confidentiality protection: The confidentiality protection may also be referred to as encryption protection. A transmitting end performs confidentiality protection on a plaintext or a ciphertext based on a confidentiality protection algorithm and a confidentiality protection key. The receiving end may decrypt, based on the same confidentiality protection algorithm and the same confidentiality protection key, data obtained through the confidentiality protection.

It should be understood that definitions of the foregoing technical terms are merely examples. For example, with continuous development of technologies, ranges of the foregoing definitions may also change. This is not limited in embodiments of this application.

With reference to the foregoing network architecture, the following describes a communication method provided in an embodiment of this application.

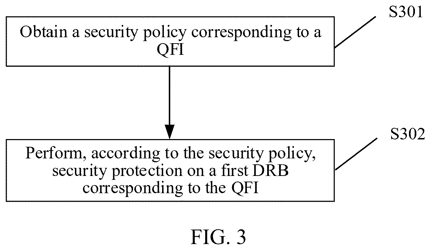

FIG. 3 is a schematic flowchart of a communication method according to an embodiment of this application. FIG. 3 shows the method by using an example in which an execution body is an access network device. The access network device in FIG. 3 may alternatively be a chip, a chip system, or a processor that supports the access network device in implementing the method, or may be a logical module or software that can implement all or some functions of the access network device. As shown in FIG. 3, the communication method may include the following steps.

S301: The access network device obtains a security policy corresponding to a QFI.

The QFI is an identifier of a QoS flow. The security policy may also be referred to as security protection indication information or the like, and may include an integrity protection policy and/or a confidentiality protection policy. Optionally, the security policy may indicate whether to perform/enable/activate (activate) security protection. For example, the security policy may indicate the security protection such as required (required), preferred (preferred), and not needed (not needed), and the security protection includes integrity protection and/or confidentiality protection. Optionally, the security policy may indicate what security protection is to be performed. For example, the security policy may indicate that the confidentiality protection is required and the integrity protection is not required, the security policy may indicate that the confidentiality protection is preferred and the integrity protection is not required, or the security policy may indicate that the confidentiality protection is not required and the integrity protection is required.

Optionally, the security policy may be represented in a form of an identifier. The identifier may be a preset character, character string, value, or the like, and values of different identifiers may represent different security policies. For example, the identifier is a value of two bits (bits). When the identifier is set to 00, it may indicate that the security policy is that the confidentiality protection is not required and the integrity protection is not required. When the identifier is set to 01, it may indicate that the confidentiality protection is required and the integrity protection is not required. When the identifier is set to 02, the confidentiality protection is not required and the integrity protection is required. When the identifier is set to 03, the confidentiality protection is required and the integrity protection is required. It may be understood that a representation form of the security policy is merely an example for description, and the representation form of the security policy is not limited in this application.

That the access network device obtains a security policy corresponding to a QFI may be any one of the following possible implementations.

In a first possible implementation, a session management function network element sends the security policy corresponding to the QFI to the access network device. Correspondingly, the access network device receives the security policy corresponding to the QFI from the session management function network element. Specifically, that the session management function network element sends the QFI and the security policy to the access network device may also be referred to as sending a correspondence between the QFI and the security policy to the access network device. In this application, another similar sending manner is not described again.

In a second possible implementation, the access network device obtains QoS attribute indication information corresponding to the QFI, where the QoS attribute indication information indicates quality of service guarantee used for a data flow; obtains the security policy corresponding to the QoS attribute indication information; and determines, based on the QoS attribute indication information corresponding to the QFI and the security policy corresponding to the QoS attribute indication information, the security policy corresponding to the QFI. In an embodiment, the session management function network element sends, to the access network device, the QoS attribute indication information corresponding to the QFI, and correspondingly, the access network device receives the QoS attribute indication information corresponding to the QFI from the session management function network element. An application function network element sends, to the access network device, the security policy corresponding to the QoS attribute indication information, and correspondingly, the access network device receives the security policy corresponding to the QoS attribute indication information from the application function network element.

S302: The access network device performs, according to the security policy, security protection on a first DRB corresponding to the QFI.

After obtaining the security policy corresponding to the QFI, the access network device may perform, according to the security policy, security protection on the first DRB corresponding to the QFI. This may be understood as that the access network device may perform security protection on a data packet carried on the first DRB. This may also be understood as that the first DRB supports the security policy corresponding to the QFI. The security protection may include the integrity protection and/or the confidentiality protection.

For example, the security policy indicates that the security protection is required, and the access network device may determine that the confidentiality protection and/or the integrity protection are/is enabled for the first DRB corresponding to the QFI. For another example, the security policy indicates that the security protection is preferred, and the access network device may determine that the confidentiality protection and/or the integrity protection are/is enabled for the first DRB corresponding to the QFI, or determine that the confidentiality protection and/or the integrity protection are/is not enabled for the first DRB corresponding to the QFI. For another example, the security policy indicates that the security protection is not required, and the access network device may determine that the confidentiality protection and/or the integrity protection are/is not enabled for the first DRB corresponding to the QFI.

For example, if the security policy indicates that the confidentiality protection is required and the integrity protection is not required, the access network device may determine that the confidentiality protection is enabled and the integrity protection is not enabled for the first DRB corresponding to the QFI. For another example, if the security policy indicates that the confidentiality protection is preferred and the integrity protection is not required, the access network device may determine that the confidentiality protection is enabled and the integrity protection is not enabled for the first DRB corresponding to the QFI, or the access network device may determine that the confidentiality protection is not enabled and the integrity protection is not enabled for the first DRB corresponding to the QFI. For another example, if the security policy indicates that the confidentiality protection is not required and the integrity protection is required, the access network device may determine that the confidentiality protection is not enabled and the integrity protection is enabled for the first DRB corresponding to the QFI.

In embodiments of this application, security policy control on a user plane session at a DRB granularity can be implemented, and different security policies correspond to different DRBs, to implement data security protection at the DRB granularity, so as to meet security requirements of different types of services. Accuracy of service data security protection can be improved in this case, compared with that in a case in which a same security policy is used for all DRBs at a PDU session granularity.

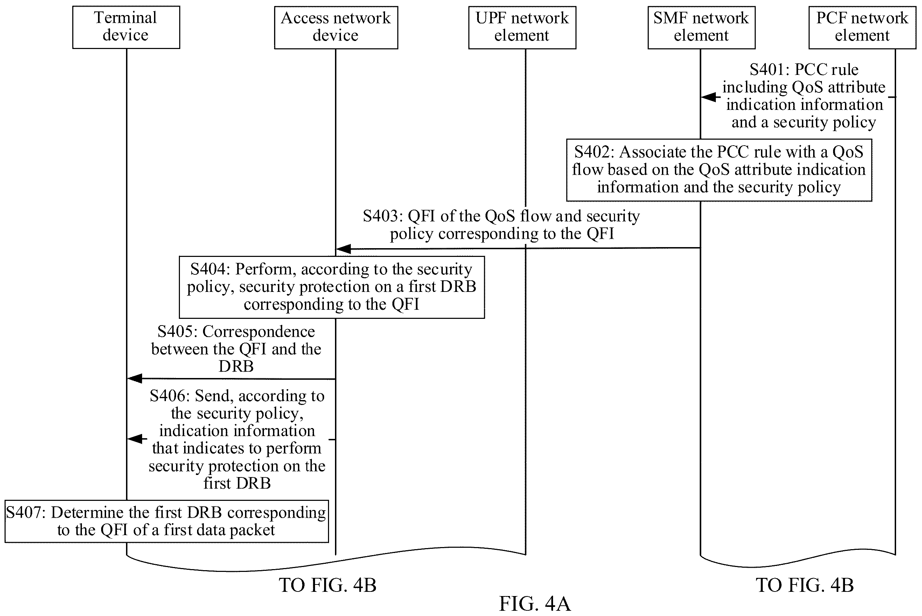

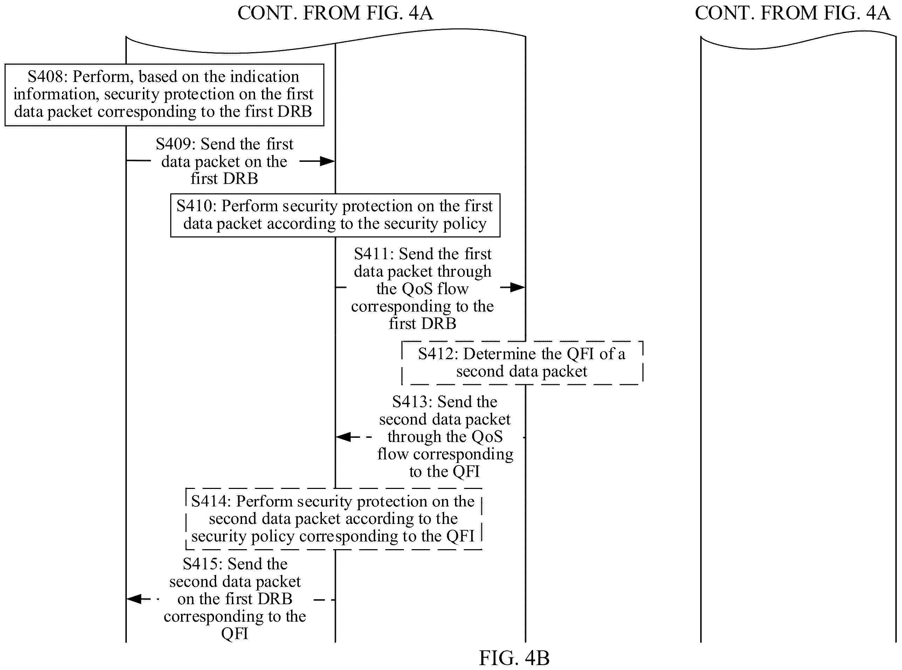

FIG. 4A and FIG. 4B is an interaction diagram of a communication method according to an embodiment of this application. The communication method shown in FIG. 4A and FIG. 4B is a detailed embodiment based on FIG. 3. It should be understood that, for explanations of terms in different embodiments of this application, reference may be made to each other. To avoid redundant description, a same term may not be described in detail in different embodiments. This embodiment may be applied to the first possible implementation in which the access network device obtains the security policy corresponding to the QFI in the foregoing step S301. In FIG. 4A and FIG. 4B, an example in which a terminal device, an access network device, a UPF network element, an SMF network element, and a PCF network element are used as execution bodies of the interaction diagram is used for illustrating the method. However, this application does not limit execution bodies of the interaction diagram. For example, the terminal device in FIG. 4A and FIG. 4B may alternatively be a chip, a chip system, or a processor that supports the terminal device in implementing the method, or may be a logical module or software that can implement all or some functions of the terminal device. The access network device in FIG. 4A and FIG. 4B may alternatively be a chip, a chip system, or a processor that supports the access network device in implementing the method, or may be a logical module or software that can implement all or some functions of the access network device. The UPF network element in FIG. 4A and FIG. 4B may alternatively be a chip, a chip system, or a processor that supports the UPF network element in implementing the method, or may be a logical module or software that can implement all or some functions of the UPF network element. The SMF network element in FIG. 4A and FIG. 4B may alternatively be a chip, a chip system, or a processor that supports the SMF network element in implementing the method, or may be a logical module or software that can implement all or some functions of the SMF network element. The PCF network element in FIG. 4A and FIG. 4B may alternatively be a chip, a chip system, or a processor that supports the PCF network element in implementing the method, or may be a logical module or software that can implement all or some functions of the PCF network element. As shown in FIG. 4A and FIG. 4B, the communication method may include the following steps S401 to S415. Steps S412 to S415 are optional steps.

S401: The PCF network element sends a PCC rule including QoS attribute indication information and a security policy to the SMF network element. Correspondingly, the SMF network element receives the PCC rule including the QoS attribute indication information and the security policy from the PCF network element.

Before sending the PCC rule including the QoS attribute indication information and the security policy to the SMF network element, the PCF network element may first determine the PCC rule. Specifically, the PCF network element may receive a policy authorization request from an AF network element, and further generate the PCC rule based on the policy authorization request.

The AF network element may first perform policy grouping based on a service type of the terminal device, and then send the policy authorization request to the PCF network element. Specifically, the AF network element performs policy grouping based on the service type of the terminal device. For example, an industrial field enable service (Industry Field Enable Service, IFES) of the AF network element may obtain a full topology relationship of an operation technology (Operation Technology, OT) network field network, and perform policy grouping on various service messages supported by an industrial terminal device. Each group of policy may correspond to service description information, a security policy, QoS attribute indication information, and/or the like.

The service description information may be understood as a service-related parameter. The service-related parameter may include at least one of the following: a service type (for example, a voice service or a video service), a service identifier (for example, an IP address of a service, a port number of a service, or an application identifier), a service feature (for example, a small data service or a broadband service), an identifier of a terminal device that executes a service, and the like. For example, the identifier of the terminal device may include but is not limited to an international mobile equipment identity (international mobile equipment identity, IMEI), an international mobile subscriber identity (international mobile subscriber identity, IMSI), an IP multimedia subsystem private user identity (IMS (IP multimedia subsystem) private user identity, IMPI), a temporary mobile subscriber identity (temporary mobile subscriber identity, TMSI), an IP multimedia public identity (IP multimedia public identity, IMPU), a media access control (media access control, MAC) address, an IP address, a phone number, a globally unique temporary UE identity (globally unique temporary UE identity, GUTI) (for example, which may be specifically a 5G GUTI for 5G), a subscription permanent identifier (subscription permanent identifier, SUPI), a subscription concealed identifier (subscription concealed identifier, SUCI), or a permanent equipment identifier (permanent equipment identifier, PEI).

The QoS attribute indication information may be for representing quality of service guarantee used for a data flow. For example, the QoS attribute indication information may be a 5QI, in other words, some QoS features are represented by using a vector value. This may be understood as that the 5QI may index a group of QoS attributes and values of the QoS attributes. For example, that the 5QI=1 may indicate that a resource type (Resource Type) is a guaranteed bit rate (guaranteed bit rate, GBR) type, a priority level (Priority Level) value is 20, a data packet delay budget (Packet Delay Budget) parameter is 100 ms, ..., and a default averaging window (Default Averaging Window) is to be defined. Alternatively, for example, the QoS attribute indication information may be one or more directly delivered QoS attributes and values of the QoS attributes. For another example, the QoS attribute indication information may be a 5QI and one or more QoS attributes and values of the QoS attributes. In this application, the 5QI and/or the one or more QoS attributes and the values of the QoS attributes may be collectively referred to as the QoS attribute indication information. Details are not described subsequently.

In an embodiment, a group A may include a function security service, the security policy is that integrity protection is required, and the QoS attribute indication information is a 5QI 1. A group B may include a real-time service, the security policy is none (which may be understood as that confidentiality protection is not required and the integrity protection is not required), and the group B may correspond to different QoS attribute indication information that is a 5QI 2/a 5QI 3/a 5QI 4 based on different service periodicities in which the real-time service may exist. A group C may include a non-real-time service, the security policy is that the confidentiality protection is required and the integrity protection is required, and the QoS attribute indication information is a 5QI 5. A group D may include an encryption-related service, the security policy is that the confidentiality protection is required, and the QoS attribute indication information is a 5QI 6; and so on.

After performing policy grouping based on the service type of the terminal device, the AF network element may send the policy authorization request to the PCF network element. In a possible implementation, the AF network element may pre-send policy authorization requests of a plurality of terminal devices to an NEF network element in batches. The request may include an identifier of a terminal device, service flow information, QoS attribute indication information of each service flow, and/or a corresponding security policy. For example, a specific structure may be: an identifier of a terminal device -> a service data flow (service data flow, SDF) -> QoS attribute indication information -> a security policy. The policy authorization request may be stored in a UDR network element by the NEF network element. When receiving a policy association establishment request message from the SMF network element, the PCF network element may obtain, from the UDR network element based on the identifier of the terminal device, a preconfigured policy authorization request corresponding to the terminal device, and further generate the PCC rule. In another possible implementation, when receiving a service request from a terminal device, the AF network element may send a policy authorization request for the terminal device to the PCF network element. In still another possible implementation, when receiving a service request, the AF network element may send a policy authorization request for a service data flow to the PCF network element.

The PCF network element may receive the policy authorization request from the AF network element. The policy authorization request may include the service description information, the QoS attribute indication information, and the security policy. After receiving the policy authorization request, the PCF may determine the PCC rule. The PCC rule is a set of rule information for detecting an SDF and performing policy control and charging control on the service data flow. For example, the PCC rule may be for detecting a service data flow to which an IP packet belongs, identifying a service to which the service data flow belongs, providing an available charging parameter for the service data flow, providing the policy control for the service data flow, and the like, where the policy control may include the QoS attribute indication information and the security policy. In an embodiment, the PCC rule may include a plurality of parameters, for example, a packet filter set (Packet Filter Set), QoS attribute indication information, precedence (precedence), a security policy, an uplink and downlink maximum flow bit rate (UL and DL Maximum Flow Bit Rate), an uplink and downlink guaranteed flow bit rate (UL and DL Guaranteed Flow Bit Rate), an allocation and retention priority (allocation and retention priority, ARP), and QoS notification control (QoS notification control, QNC).

The packet filter set (Packet Filter Set) is for describing a range of the service data flow used by the PCC rule, and may be matched based on an internet protocol (Internet Protocol, IP) quintuple (a source IP address, a destination IP address, a protocol number, a source port, and a destination port) or an application identifier.

The precedence indicates precedence of the PCC rule, to be specific, precedence processing performed when the data flow can match a plurality of PCC rules.

S402: The SMF network element associates the PCC rule with a QoS flow.

Before sending a QFI of the QoS flow and a security policy corresponding to the QFI to the access network device, the SMF network element may first obtain the security policy corresponding to the QFI of the QoS flow, that is, obtain a correspondence between the QFI and the security policy. Specifically, after receiving the PCC rule including the QoS attribute indication information and the security policy from the PCF network element in step S401, the SMF network element may associate the PCC rule with the QoS flow based on the QoS attribute indication information and the security policy, and then obtain, based on the PCC rule and the QoS flow associated with the PCC rule, the security policy corresponding to the QFI of the QoS flow.

That the SMF network element associates the PCC rule with a QoS flow may also be understood as that the SMF network element performs QoS flow binding (QoS Flow binding) according to the PCC rule. This may also be understood as that the SMF network element may perform QoS flow binding based on some or all parameters of a plurality of parameters in the PCC rule.

Specifically, the SMF network element may associate the PCC rule with the QoS flow based on the QoS attribute indication information and the security policy. In a possible implementation, the SMF network element may determine, from a created QoS flow, a QoS flow supporting the foregoing QoS attribute indication information and the security policy, and associate the PCC rule with the QoS flow. In another possible implementation, the SMF network element may create a new QoS flow that supports the foregoing QoS attribute indication information and the security policy, and associate the PCC rule with the created QoS flow.

Specifically, the SMF network element may determine, based on information such as the 5QI, the ARP, and the security policy in the PCC rule, whether there is an existing QoS flow that can provide the 5QI, the ARP, and the security policy that are required in the PCC rule. If there is an existing QoS flow, the SMF network element may associate the PCC rule with the QoS flow. If there is no existing QoS flow, the SMF network element may create a new QoS flow based on the information such as the 5QI, the ARP, and the security policy in the PCC rule, and associate the PCC rule with the new QoS flow.

S403: The SMF network element sends the QFI of the QoS flow and the security policy corresponding to the QFI to the access network device. Correspondingly, the access network device receives the QFI of the QoS flow and the security policy corresponding to the QFI from the SMF network element.

After the SMF network element associates the PCC rule with the QoS flow, in other words, after the QoS flow binding is completed, the SMF network element may send the QFI and the security policy corresponding to the QFI to the access network device, where the QFI is an identifier of the QoS flow. Specifically, the SMF network element may send the QFI and a QoS profile (QoS Profile) corresponding to the QFI to the access network device. The QoS profile may include some or all of the plurality of parameters in the PCC rule delivered by the PCF network element, for example, the QoS attribute indication information (for example, the 5QI) and the security policy. For example, a specific structure may be a QFI <- a QoS Profile (a 5QI and a security policy).

S404: The access network device performs, according to the security policy, security protection on a first DRB corresponding to the QFI.

After obtaining the security policy corresponding to the QFI, in other words, after receiving the QFI and the security policy corresponding to the QFI from the SMF network element, the access network device may determine, according to the security policy, the first DRB corresponding to the QFI. In a possible implementation, the first DRB supporting the security policy corresponding to the QFI is determined from a created DRB. In another possible implementation, a new first DRB that supports the security policy corresponding to the QFI is created. For example, a correspondence may be represented as a QFI <- a 5QI <- a DRB <- a security policy. It can be understood that a same DRB may correspond to one QoS flow, or may correspond to a plurality of QoS flows.

S405: The access network device sends a correspondence between the QFI and the first DRB to the terminal device. Correspondingly, the terminal device receives the correspondence between the QFI and the first DRB from the access network device.

After determining the first DRB corresponding to the QFI, the access network device may send the correspondence between the QFI and the first DRB to the terminal device.

S406: The access network device sends, to the terminal device according to the security policy, indication information that indicates to perform security protection on the first DRB. Correspondingly, the terminal device receives, from the access network device, the indication information that indicates to perform security protection on the first DRB.

The access network device may send the indication information to the terminal device according to the security policy corresponding to the QFI. The indication information indicates to perform security protection on the first DRB corresponding to the QFI.

It may be understood that the access network device may send, to the terminal device in different messages or in a same message, the correspondence between the QFI and the DRB and the indication information that indicates the security protection for the DRB. In other words, S405 and S406 may be a same step or two different steps, and an execution sequence is not limited in this application. In a possible implementation, a same message may be a same RRC configuration message, and different messages may be two RRC configuration messages.

It should be noted that, steps S401 to S406 are information transferred by a control plane interface, may be processing performed when the security policy is delivered or the security policy is activated, and are usually performed before data flow transmission. The following steps S407 to S415 may be processing of the data flow transmission on a user plane. Step S407 to step S411 are implementations of sending an uplink data packet, and are specifically described as follows.

S407: The terminal device determines the first DRB corresponding to the QFI of a first data packet.

When the terminal device needs to send the first data packet (the uplink data packet) to the access network device, the terminal device may first determine the QFI of the first data packet. The terminal device receives the QFI and a QoS rule corresponding to the QFI from the SMF network element, where the QoS rule is used by the terminal device to associate the first data packet with the corresponding QFI, and the QoS rule includes a packet filter set (Packet Filter Set) and matching precedence (Precedence) information. The QFI of the first data packet is determined based on the QFI and the QoS rule corresponding to the QFI. Specifically, the terminal device may match, based on service flow information and a packet filter set of the first data packet, the QoS rule corresponding to the first data packet, determine the QFI of the first data packet based on a correspondence between the QFI and the QoS rule, and then determine, based on the correspondence between the QFI and the first DRB, that the first DRB corresponding to the first data packet It should be understood that a correspondence between the first data packet and the first DRB means that the first data packet is transmitted on the first DRB.

S408: The terminal device performs, based on the indication information, security protection on the first data packet corresponding to the first DRB.

The terminal device performs, based on the indication information (for details, refer to the indication information in step S405), security protection on the first data packet corresponding to the first DRB. The security protection may be, for example, performing integrity protection, confidentiality protection, or integrity protection and confidentiality protection. For example, the confidentiality protection may be performing encryption processing on the first data packet.

S409: The terminal device sends the first data packet to the access network device on the first DRB. Correspondingly, the access network device receives the first data packet from the terminal device on the first DRB.

The terminal device may map a QoS flow of the first data packet to the first DRB, and may send the first data packet to the access network device on the first DRB after performing, based on the indication information, security protection on the first data packet corresponding to the first DRB.

S410: The access network device performs security protection on the first data packet according to the security policy.

After receiving the first data packet from the terminal device, the access network device may perform security protection on the first data packet according to the security policy. There may be the following implementations.

In a first implementation, the access network device receives the first data packet from the terminal device on the first DRB, may determine, based on an identifier of the first DRB, the security policy corresponding to the first DRB, and then perform security protection on the first data packet according to the security policy. Specifically, in step S403, the access network device receives the QFI and the security policy corresponding to the QFI from the SMF network element. In step S405, after determining the correspondence between the QFI and the first DRB, the access network device may establish a relationship between the first DRB and the security policy through the QFI, and store a correspondence between the first DRB and the security policy. After receiving the first data packet on the first DRB, the access network device may determine, based on the identifier of the first DRB, the security policy corresponding to the first DRB, so that the security protection can be performed on the first data packet according to the security policy.

In a second implementation, optionally, the first data packet may include the QFI, and the QFI is an identifier of the QoS flow. The access network device receives the first data packet from the terminal device on the first DRB. The first data packet includes the QFI. The access network device may determine, based on the QFI in the first data packet, the security policy corresponding to the QFI, and perform security protection on the first data packet according to the corresponding security policy.

That the access network device performs security protection on the first data packet and that the terminal device performs security protection on the first data packet may correspond to each other. This may be understood as that, for example, if that the terminal device performs security protection on the first data packet is performing encryption and/or integrity protection on the first data packet, that the access network device performs security protection on the first data packet may be performing decryption and/or integrity check on the first data packet.

S411: The access network device sends the first data packet to the UPF network element through the QoS flow corresponding to the first DRB. Correspondingly, the UPF network element receives the first data packet from the access network device through the QoS flow corresponding to the first DRB.

After receiving the first data packet from the terminal device, and performing security protection on the first data packet, the access network device may send the first data packet to the UPF network element, to implement uplink data transmission on the user plane.

Step S412 to step S415 are implementations of sending a downlink data packet, and are specifically described as follows.

S412: The UPF network element determines the QFI of a second data packet.

When receiving the downlink data packet, for example, the second data packet, the UPF network element may first determine the QFI of the second data packet. Specifically, the UPF network element receives the QFI and a QoS rule corresponding to the QFI from the SMF network element, where the QoS rule is used by the UPF network element to associate the second data packet with the corresponding QFI, and the QoS rule includes a packet filter set (Packet Filter Set) and matching precedence (Precedence) information. The QFI of the second data packet is determined based on the QFI and the QoS rule corresponding to the QFI. Specifically, the UPF network element may match, based on service flow information of the second data packet and the packet filter set, the QoS rule corresponding to the second data packet, and determine the QFI of the second data packet based on a correspondence between the QFI and the QoS rule.

S413: The UPF network element sends the second data packet to the access network device through the QoS flow corresponding to the QFI. Correspondingly, the access network device receives the second data packet from the UPF network element through the QoS flow corresponding to the QFI.

After determining the QFI of the second data packet, the UPF network element may send the second data packet to the access network device through the QoS flow corresponding to the QFI. Optionally, the second data packet may include the QFI.

S414: The access network device performs security protection on the second data packet according to a security policy corresponding to the QFI.

There may be the following implementations in which the access network device performs security protection on the second data packet according to the security policy corresponding to the QFI.

In a first implementation, the access network device receives the second data packet from the UPF network element through the QoS flow corresponding to the QFI. In step S403, the access network device receives the QFI and the security policy corresponding to the QFI from the SMF network element. Therefore, the access network device may determine the corresponding security policy based on the QFI of the QoS flow, and then perform security protection on the second data packet according to the corresponding security policy.

In a second implementation, the access network device receives the second data packet from the UPF network element through the QoS flow corresponding to the QFI. The second data packet includes the QFI. In step S403, the access network device receives the QFI and the security policy corresponding to the QFI from the SMF network element. Therefore, the access network device may determine, based on the QFI in the second data packet, the security policy corresponding to the QFI, and perform security protection on the second data packet according to the corresponding security policy. For example, the security protection may be integrity protection, confidentiality protection, or integrity protection and confidentiality protection. For example, the confidentiality protection may be performing encryption processing on the first data packet.

S415: The access network device sends the second data packet to the terminal device on the first DRB corresponding to the QFI. Correspondingly, the terminal device receives the second data packet from the access network device on the first DRB corresponding to the QFI.

After receiving the second data packet from the UPF network element, and performing security protection on the second data packet, the access network device may send the second data packet to the terminal device, to implement downlink data transmission on the user plane. After receiving the second data packet, the terminal device may perform security protection on the second data packet. That the terminal device performs security protection on the second data packet and that the access network device performs security protection on the second data packet may correspond to each other. This may be understood as that, for example, if that the access network device performs security protection on the second data packet is performing encryption and/or integrity protection on the second data packet, that the terminal device performs security protection on the second data packet may be performing decryption and/or integrity check on the second data packet.

It may be understood that an execution sequence of a plurality of steps in the foregoing embodiments is not limited in this application. In embodiments of this application, security policy control on a user plane session at a QoS flow/DRB granularity can be implemented. Different security policies are associated with specific QoS flows, and mapping between a QoS flow and a DRB is implemented, so that different security policies can be executed for different QoS flows/DRBs, and security protection based on the QoS flow/DRB is implemented, to meet security requirements of different types of services. Accuracy of service data security protection can be improved in this case, compared with that in a case in which a same security policy is used for all QoS flows/DRBs at a PDU session granularity.

With reference to the foregoing network architecture, the following describes another communication method provided in an embodiment of this application.

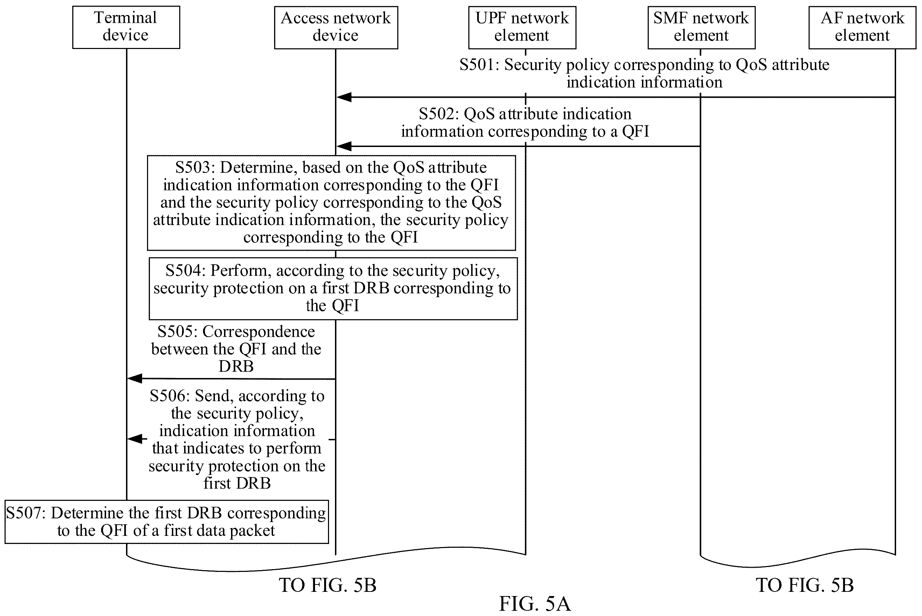

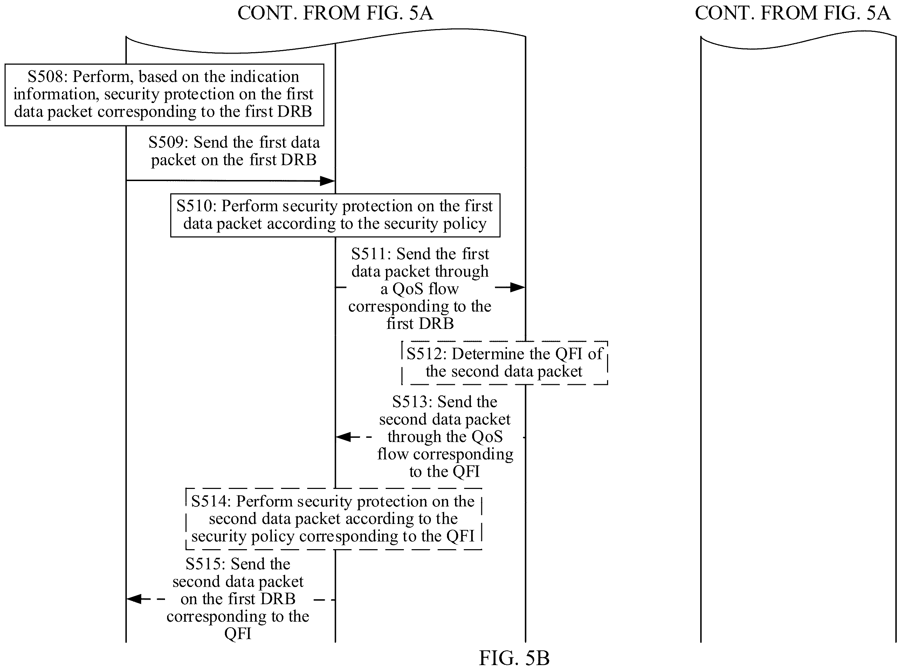

FIG. 5A and FIG. 5B is an interaction diagram of a communication method according to an embodiment of this application. The communication method shown in FIG. 5A and FIG. 5B is a detailed embodiment based on FIG. 3. It should be understood that, for explanations of terms in different embodiments of this application, reference may be made to each other. To avoid redundant description, a same term may not be described in detail in different embodiments. This embodiment may be applied to the second possible implementation in which the access network device obtains the security policy corresponding to the QFI in the foregoing step S301. In FIG. 5A and FIG. 5B, an example in which a terminal device, an access network device, a UPF network element, an SMF network element, and an AF network element are used as execution bodies of the interaction diagram is used for illustrating the method. However, this application does not limit execution bodies of the interaction diagram. For example, the terminal device in FIG. 5A and FIG. 5B may alternatively be a chip, a chip system, or a processor that supports the terminal device in implementing the method, or may be a logical module or software that can implement all or some functions of the terminal device. The access network device in FIG. 5A and FIG. 5B may alternatively be a chip, a chip system, or a processor that supports the access network device in implementing the method, or may be a logical module or software that can implement all or some functions of the access network device. The UPF network element in FIG. 5A and FIG. 5B may alternatively be a chip, a chip system, or a processor that supports the UPF network element in implementing the method, or may be a logical module or software that can implement all or some functions of the UPF network element. The SMF network element in FIG. 5A and FIG. 5B may alternatively be a chip, a chip system, or a processor that supports the SMF network element in implementing the method, or may be a logical module or software that can implement all or some functions of the SMF network element. The AF network element in FIG. 5A and FIG. 5B may alternatively be a chip, a chip system, or a processor that supports the AF network element in implementing the method, or may be a logical module or software that can implement all or some functions of the AF network element. As shown in FIG. 5A and FIG. 5B, the communication method may include the following steps S501 to S515. Steps S512 to S515 are optional steps.

S501: The AF network element sends, to the access network device, a security policy corresponding to QoS attribute indication information. Correspondingly, the access network device receives, from the AF network element, the security policy corresponding to the QoS attribute indication information.

The AF network element may first perform policy grouping based on a service type of the terminal device, and then send the security policy corresponding to the QoS attribute indication information to the access network device. It may be understood that, for specific descriptions of policy grouping performed by the AF network based on the service type of the terminal device, refer to the foregoing step S401. To avoid repetition, details are not described herein again.

The AF network sends the security policy corresponding to the QoS attribute indication information to the access network device. An example specific structure may be: a 5QI 1 -> a security policy **1,** a 5QI 2/a 5QI 3/a 5QI 4 -> a security policy 2, a 5QI 5 -> a security policy 3, a 5QI 6 -> a security policy 4, and the like. An implementation in which the AF network element sends the security policy corresponding to the QoS attribute indication information to the access network device may be as follows.

In a possible implementation, the AF network element may send the security policy corresponding to the QoS attribute indication information to the access network device via a 5GC. For example, the AF network element may send the security policy corresponding to the QoS attribute indication information to the access network device via an NEF/a PCF/an SMF/other network elements.

In another possible implementation, the AF network element may send the security policy corresponding to the QoS attribute indication information to the access network device through an API exposed by an access network device (for example, a RAN) operation, administration, and maintenance (Operation, Administration, and Maintenance, OAM) system. For example, the AF network element obtains, based on a capability exposure architecture, an access network device (for example, a gNB/a cell) in which the terminal device is currently located, and sends the security policy corresponding to the QoS attribute indication information to the access network device OAM.

It may be understood that the foregoing description is provided by using the AF network element only as an example. The access network device may alternatively receive the security policy corresponding to the QoS attribute indication information from another network element. This is not limited in embodiments of this application.

S502: The SMF network element sends the QoS attribute indication information corresponding to the QFI to the access network device. Correspondingly, the access network device receives the QoS attribute indication information corresponding to the QFI from the SMF network element.

Before sending the QoS attribute indication information corresponding to the QFI to the access network device, the SMF network element may first perform QoS flow binding (QoS Flow binding). This may be understood as that the SMF network element performs QoS flow binding according to a PCC rule, or the SMF network element associates a PCC rule with a QoS flow. Specifically, the SMF network element may receive an authorized PCC rule from a PCF network element. In an embodiment, the PCC rule may include a plurality of parameters, for example, a packet filter set (Packet Filter Set), QoS attribute indication information, precedence (precedence), a security policy, an uplink and downlink maximum flow bit rate (UL and DL Maximum Flow Bit Rate), an uplink and downlink guaranteed flow bit rate (UL and DL Guaranteed Flow Bit Rate), an ARP, and QNC. For details about the case in which the SMF network element performs QoS flow binding according to the PCC rule, refer to the detailed descriptions of the foregoing step S401.

After completing the QoS flow binding, the SMF network element may send, to the access network device, the QoS attribute indication information corresponding to the QFI, where the QFI is an identifier of the QoS flow. Specifically, the SMF network element may send the QFI and a QoS profile (QoS Profile) corresponding to the QFI to the access network device. The QoS profile may include some or all of the plurality of parameters in the PCC rule delivered by the PCF network element, for example, the QoS attribute indication information (for example, a 5QI). For example, a specific structure may be a QFI <- a QoS Profile (a 5QI).

It may be understood that the foregoing description is provided by using the SMF network element only as an example. The access network device may alternatively receive the QoS attribute indication information corresponding to the QFI from another network element. This is not limited in embodiments of this application.

S503: The access network device determines, based on the QoS attribute indication information corresponding to the QFI and the security policy corresponding to the QoS attribute indication information, the security policy corresponding to the QFI.

After receiving the security policy corresponding to the QoS attribute indication information and the QoS attribute indication information corresponding to the QFI, the access network device may determine, based on the QoS attribute indication information corresponding to the QFI and the security policy corresponding to the QoS attribute indication information, the security policy corresponding to the QFI. For example, if the 5QI 1 -> the security policy 1, and the QFI1 -> the 5QI 1, the QFI1 -> 5QI 1 -> the security policy 1.

S504: The access network device performs, according to the security policy, security protection on a first DRB corresponding to the QFI.

After obtaining the security policy corresponding to the QFI, in other words, after determining, based on the QoS attribute indication information corresponding to the QFI and the security policy corresponding to the QoS attribute indication information, the security policy corresponding to the QFI, the access network device may determine, according to the security policy, the first DRB corresponding to the QFI. For details about the case in which the access network device determines, according to the security policy, the first DRB corresponding to the QFI, refer to detailed descriptions of the foregoing step S404.

S505: The access network device sends a correspondence between the QFI and the first DRB to the terminal device. Correspondingly, the terminal device receives the correspondence between the QFI and the first DRB from the access network device.

After determining the first DRB corresponding to the QFI, the access network device may send the correspondence between the QFI and the first DRB to the terminal device.

S506: The access network device sends, to the terminal device according to the security policy, indication information that indicates to perform security protection on the first DRB. Correspondingly, the terminal device receives, from the access network device, the indication information that indicates to perform security protection on the first DRB.

It may be understood that for specific descriptions of step S506, refer to the foregoing step S406. To avoid repetition, details are not described herein again.

It should be noted that, steps S501 to S506 are information transferred by a control plane interface, may be processing performed when the security policy is delivered or the security policy is activated, and are usually performed before data flow transmission. The following steps S507 to S515 may be processing of the data flow transmission on a user plane. Step S507 to step S511 are implementations of sending an uplink data packet, and are specifically described as follows.

S507: The terminal device determines the first DRB corresponding to the QFI of a first data packet.

S508: The terminal device performs, based on the indication information, security protection on the first data packet corresponding to the first DRB.

S509: The terminal device sends the first data packet to the access network device on the first DRB. Correspondingly, the access network device receives the first data packet from the terminal device on the first DRB.

S510: The access network device performs security protection on the first data packet according to the security policy.

S511: The access network device sends the first data packet to the UPF network element through the QoS flow corresponding to the first DRB. Correspondingly, the UPF network element receives the first data packet from the access network device through the QoS flow corresponding to the first DRB.

It may be understood that for specific descriptions of step S507 to step S511, refer to the foregoing step S407 to step S411. To avoid repetition, details are not described herein again. Step S512 to step S515 are implementations of sending a downlink data packet, and are specifically described as follows.

S512: The UPF network element determines the QFI of a second data packet.

S513: The UPF network element sends the second data packet to the access network device through the QoS flow corresponding to the QFI. Correspondingly, the access network device receives the second data packet from the UPF network element through the QoS flow corresponding to the QFI.

S514: The access network device performs security protection on the second data packet according to a security policy corresponding to the QFI.

S515: The access network device sends the second data packet to the terminal device on the first DRB corresponding to the QFI. Correspondingly, the terminal device receives the second data packet from the access network device on the first DRB corresponding to the QFI.

It may be understood that for specific descriptions of specific steps S512 to S515, refer to the foregoing steps S412 to S415. To avoid repetition, details are not described herein again.

It may be understood that an execution sequence of a plurality of steps in the foregoing embodiments is not limited in this application. In embodiments of this application, security policy control on a user plane session at a QoS flow/DRB granularity can be implemented. Different security policies are associated with specific QoS flows, and mapping between a QoS flow and a DRB is implemented, so that different security policies can be executed for different QoS flows/DRBs, and security protection based on the QoS flow/DRB is implemented, to meet security requirements of different types of services. Accuracy of service data security protection can be improved in this case, compared with that in a case in which a same security policy is used for all QoS flows/DRBs at a PDU session granularity.

The foregoing describes the method embodiments provided in embodiments of this application. The following describes apparatus embodiments in embodiments of this application.

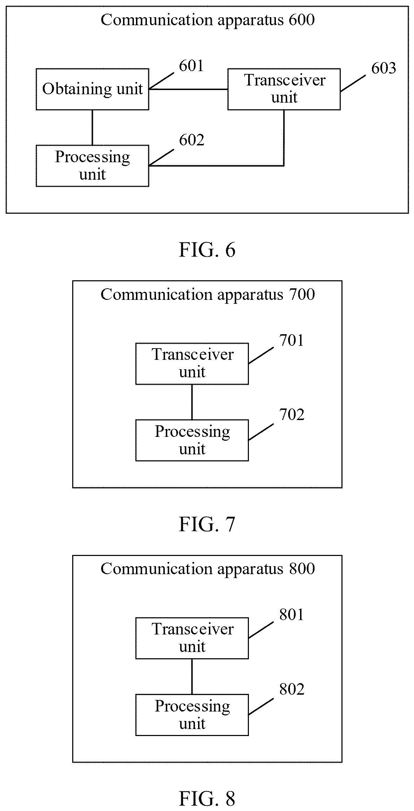

FIG. 6 is a diagram of a structure of a communication apparatus according to an embodiment of this application. The communication apparatus may be used in an access network device, may be used in a module (for example, a chip or a processor) in the access network device, or may be used in a logical module or software that can implement all or some functions of the access network device. For example, as shown in FIG. 6, the communication apparatus 600 may include an obtaining unit 601 and a processing unit 602.

The obtaining unit 601 is configured to obtain a security policy corresponding to a QFI, where the security policy includes an integrity protection policy and/or a confidentiality protection policy.

The processing unit 602 is configured to perform, according to the security policy, security protection on a first DRB corresponding to the QFI.

In an embodiment, the obtaining unit 601 is specifically configured to receive the security policy corresponding to the QFI from a session management function network element.

In an embodiment, the obtaining unit 601 is specifically configured to:
obtain QoS attribute indication information corresponding to the QFI, where the QoS attribute indication information indicates quality of service guarantee used for a data flow;
obtain the security policy corresponding to the QoS attribute indication information; and
determine, based on the QoS attribute indication information corresponding to the QFI and the security policy corresponding to the QoS attribute indication information, the security policy corresponding to the QFI.

In an embodiment, the communication apparatus 600 may further include:
a transceiver unit 603, configured to send indication information to a terminal device according to the security policy, where the indication information indicates to perform security protection on the first DRB.

In an embodiment, the processing unit 602 is specifically configured to:
receive a first data packet from the terminal device on the first DRB; and
perform security protection on the first data packet according to the security policy.

In an embodiment, the processing unit 602 is further configured to determine the security policy based on the QFI included in the first data packet.

In an embodiment, the transceiver unit 603 is further configured to send the first data packet to a user plane function network element through a QoS flow corresponding to the QFI.

In an embodiment, the processing unit 602 is specifically configured to:
receive a second data packet from the user plane function network element through the QoS flow corresponding to the QFI;
perform security protection on the second data packet according to the security policy; and
send the second data packet to the terminal device on the first DRB.

In an embodiment, the first DRB supports the security policy.

In an embodiment, the processing unit 602 is further configured to determine the first DRB from a created DRB or create the first DRB.

For more detailed descriptions of the obtaining unit 601, the processing unit 602, and the transceiver unit 603, directly refer to related descriptions of the access network device in the foregoing method embodiments shown in FIG. 3 to FIG. 5A and FIG. 5B. Details are not described herein again.

FIG. 7 is a diagram of a structure of another communication apparatus according to an embodiment of this application. The communication apparatus may be used in a terminal device, may be used in a module (for example, a chip or a processor) in the terminal device, or may be used in a logical module or software that can implement all or some functions of the terminal device. As shown in FIG. 7, for example, the communication apparatus 700 may include a transceiver unit 701 and a processing unit 702.

The transceiver unit 701 is configured to receive indication information from an access network device, where the indication information indicates to perform security protection on a first DRB, and the security protection includes integrity protection and/or confidentiality protection.

The processing unit 702 is configured to perform security protection on the first DRB based on the indication information.

In an embodiment, the processing unit 702 is specifically configured to:
perform security protection on a first data packet based on the indication information; and
send, to the access network device on the first DRB, the first data packet on which the security protection is performed.

In an embodiment, the processing unit 702 is specifically configured to:
receive a second data packet from the access network device on the first DRB; and
perform security protection on the second data packet based on the indication information.

For more detailed descriptions of the transceiver unit 701 and the processing unit 702, directly refer to related descriptions of the terminal device in the foregoing method embodiments shown in FIG. 3 to FIG. 5A and FIG. 5B. Details are not described herein again.

FIG. 8 is a diagram of a structure of still another communication apparatus according to an embodiment of this application. The communication apparatus may be used in an SMF network element, may be used in a module (for example, a chip or a processor) in the SMF network element, or may be used in a logical module or software that can implement all or some functions of the SMF network element. For example, as shown in FIG. 8, the communication apparatus 800 may include a transceiver unit 801 and a processing unit 802.

The transceiver unit 801 is configured to receive a policy and charging control rule from a policy control function network element, where the policy and charging control rule includes quality of service QoS attribute indication information and a security policy, and the security policy includes an integrity protection policy and/or a confidentiality protection policy.

The processing unit 802 is configured to associate the policy and charging control rule with a QoS flow based on the QoS attribute indication information and the security policy.

The transceiver unit 801 is further configured to send, to an access network device, the security policy corresponding to a QFI of the QoS flow.

In an embodiment, the processing unit 802 is specifically configured to:
determine, from a created QoS flow, the QoS flow supporting the QoS attribute indication information and the security policy, or create the QoS flow that supports the QoS attribute indication information and the security policy; and
associate the policy and charging control rule with the QoS flow.

For more detailed descriptions of the transceiver unit 801 and the processing unit 802, directly refer to related descriptions of the SMF network element in the foregoing method embodiments shown in FIG. 3 to FIG. 5A and FIG. 5B. Details are not described herein again.

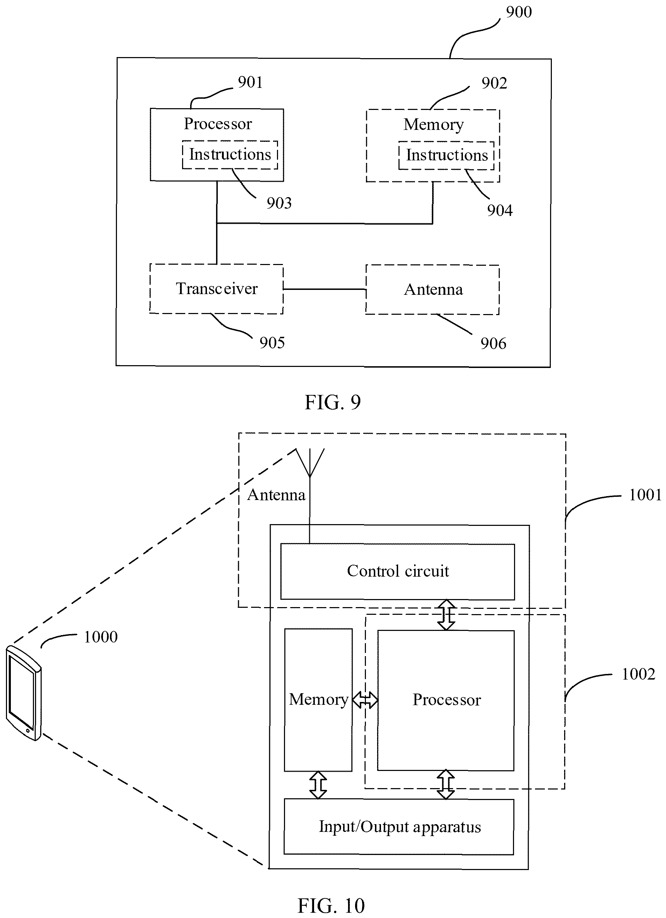

FIG. 9 is a diagram of a structure of still another communication apparatus according to an embodiment of this application. For example, as shown in FIG. 9, the apparatus 900 may include one or more processors 901. The processor 901 may also be referred to as a processing unit, and may implement a specific control function. The processor 901 may be a general-purpose processor, a dedicated processor, or the like. For example, the processor 901 may be a baseband processor or a central processing unit. The baseband processor may be configured to process a communication protocol and communication data. The central processing unit may be configured to: control a communication apparatus (for example, a base station, a baseband chip, a terminal, a terminal chip, a DU, or a CU), execute a software program, and process data of the software program.

In an optional design, the processor 901 may alternatively store instructions 903, and the instructions 903 may be run by the processor, to enable the apparatus 900 to perform the methods described in the foregoing method embodiments.

In another optional design, the processor 901 may include a transceiver unit configured to implement a receiving and sending function. For example, the transceiver unit may be a transceiver circuit, an interface, an interface circuit, or a communication interface. The transceiver circuit, the interface, or the interface circuit configured to implement the receiving and sending function may be separated, or may be integrated together. The transceiver circuit, the interface, or the interface circuit may be configured to read and write code/data. Alternatively, the transceiver circuit, the interface, or the interface circuit may be configured to transmit or transfer a signal.

In still another possible design, the apparatus 900 may include a circuit, and the circuit may implement a sending, receiving, or communication function in the foregoing method embodiments.

Optionally, the apparatus 900 may include one or more memories 902 that may store instructions 904, and the instructions may be run on the processor, so that the apparatus 900 is enabled to perform the methods described in the foregoing method embodiments. Optionally, the memory may further store data. Optionally, the processor may also store instructions and/or data. The processor and the memory may be separately disposed, or may be integrated together. For example, the correspondence described in the foregoing method embodiments may be stored in the memory or stored in the processor.

Optionally, the apparatus 900 may further include a transceiver 905 and/or an antenna 906. The processor 901 may be referred to as a processing unit, and controls the apparatus 900. The transceiver 905 may be referred to as a transceiver unit, a transceiver, a transceiver circuit, a transceiver apparatus, a transceiver module, or the like, and is configured to implement a receiving/sending function.

Optionally, the apparatus 900 in this embodiment of this application may be configured to perform the methods described in FIG. 3 to FIG. 5A and FIG. 5B in embodiments of this application.

In an embodiment, the communication apparatus 900 may be used in an access network device, may be used in a module (for example, a chip or a processor) in the access network device, or may be used in a logical module or software that can implement all or some functions of the access network device. When computer program instructions stored in the memory 902 are executed, the processor 901 is configured to control the obtaining unit 601 and the processing unit 602 to perform the operations performed in the foregoing embodiments, the transceiver 905 is configured to perform the operations performed by the transceiver unit 603 in the foregoing embodiments, and the transceiver 905 is further configured to send information to a communication apparatus other than the communication apparatus. The access network device or the module in the access network device may be further configured to perform various methods performed by the access network device in the method embodiments in FIG. 3 to FIG. 5A and FIG. 5B. Details are not described again.

In an embodiment, the communication apparatus 900 may be used in a terminal device, may be used in a module (for example, a chip or a processor) in the terminal device, or may be used in a logical module or software that can implement all or some functions of the terminal device. When computer program instructions stored in the memory 902 are executed, the processor 901 is configured to control the processing unit 702 to perform the operations performed in the foregoing embodiments, the transceiver 905 is configured to perform the operations performed by the transceiver unit 701 in the foregoing embodiments, and the transceiver 905 is further configured to send information to a communication apparatus other than the communication apparatus. The terminal device or the module in the terminal device may be further configured to perform various methods performed by the terminal device in the method embodiments in FIG. 3 to FIG. 5A and FIG. 5B. Details are not described again.

In an embodiment, the communication apparatus 900 may be used in an SMF network element, may be used in a module (for example, a chip or a processor) in the SMF network element, or may be used in a logical module or software that can implement all or some functions of the SMF network element. When computer program instructions stored in the memory 902 are executed, the processor 901 is configured to control the processing unit 802 to perform the operations performed in the foregoing embodiments, the transceiver 905 is configured to perform the operations performed by the transceiver unit 801 in the foregoing embodiments, and the transceiver 905 is further configured to send information to a communication apparatus other than the communication apparatus. The foregoing SMF network element or the module in the SMF network element may be further configured to perform various methods performed by the SMF network element in the foregoing method embodiments in FIG. 3 to FIG. 5A and FIG. 5B. Details are not described again.

The processor and the transceiver that are described in this application may be implemented on an integrated circuit (integrated circuit, IC), an analog IC, a radio frequency integrated circuit (radio frequency interface chip, RFIC), a hybrid signal IC, an application-specific integrated circuit (application-specific integrated circuit, ASIC), a printed circuit board (printed circuit board, PCB), an electronic device, or the like. The processor and the transceiver may be manufactured by using various IC technologies, for example, a complementary metal oxide semiconductor (complementary metal oxide semiconductor, CMOS), an N-type metal oxide semiconductor (nMetal-oxide-semiconductor, NMOS), a P-type metal oxide semiconductor (positive channel metal oxide semiconductor, PMOS), a bipolar junction transistor (Bipolar Junction Transistor, BJT), a bipolar CMOS (BiCMOS), silicon germanium (SiGe), and gallium arsenide (GaAs).

The apparatus described in the foregoing embodiment may be a first terminal device or a second terminal device. However, a scope of the apparatus described in this application is not limited thereto, and a structure of the apparatus may not be limited by that in FIG. 9. The apparatus may be an independent device, or may be a part of a larger device. For example, the apparatus may be:
(1) an independent integrated circuit IC, a chip, a chip system or subsystem;
(2) a set of one or more ICs, where optionally, the IC set may also include a storage component configured to store data and/or instructions;
(3) an ASIC, for example, a modem (MSM);
(4) a module that can be embedded in another device;
(5) a receiver, a terminal, an intelligent terminal, a cellular phone, a wireless device, a handheld device, a mobile unit, a vehicle-mounted device, a network device, a cloud device, an artificial intelligence device, a machine device, a home device, a medical device, an industrial device, or the like; or
(6) others.

FIG. 10 is a diagram of a structure of a terminal device according to an embodiment of this application. For ease of description, FIG. 10 shows only main components of the terminal device. As shown in FIG. 10, the terminal device 1000 includes a processor, a memory, a control circuit, an antenna, and an input/output apparatus. The processor is mainly configured to process a communication protocol and communication data, control an entire terminal, execute a software program, and process data of the software program. The memory is mainly configured to store the software program and data. A radio frequency circuit is mainly configured to perform conversion between a baseband signal and a radio frequency signal, and process the radio frequency signal. The antenna is mainly configured to receive/send a radio frequency signal in a form of an electromagnetic wave. The input/output apparatus, such as a touchscreen, a display, or a keyboard, is mainly configured to receive data input by a user and output data to the user.

After the terminal is powered on, the processor may read the software program in a storage unit, interpret and execute instructions of the software program, and process the data of the software program. When data needs to be sent in a wireless manner, the processor performs baseband processing on the to-be-sent data, and outputs a baseband signal to the radio frequency circuit. The radio frequency circuit processes the baseband signal to obtain the radio frequency signal, and sends the radio frequency signal to the outside in an electromagnetic wave form through the antenna. When data is sent to the terminal, the radio frequency circuit receives the radio frequency signal through the antenna, further converts the radio frequency signal into the baseband signal, and outputs the baseband signal to the processor. The processor converts the baseband signal into data, and processes the data.

For ease of description, only one memory and one processor are shown in FIG. 10. An actual terminal may include a plurality of processors and a plurality of memories. The memory may also be referred to as a storage medium, a storage device, or the like. This is not limited in embodiments of this application.

In an optional implementation, the processor may include a baseband processor and a central processing unit. The baseband processor is mainly configured to process the communication protocol and the communication data, and the central processing unit is mainly configured to control the entire terminal, execute the software program, and process the data of the software program. The processor in FIG. 10 integrates functions of the baseband processor and the central processing unit. A person skilled in the art may understand that the baseband processor and the central processing unit may be alternatively processors independent of each other, and are connected to each other by using a technology such as a bus. A person skilled in the art may understand that the terminal may include a plurality of baseband processors to adapt to different network standards, and the terminal may include a plurality of central processing units to enhance a processing capability of the terminal. All the components of the terminal may be connected through various buses. The baseband processor may also be expressed as a baseband processing circuit or a baseband processing chip. The central processing unit may alternatively be expressed as a central processing circuit or a central processing chip. A function of processing the communication protocol and the communication data may be built in the processor, or may be stored in the storage unit in a form of a software program, and the processor executes the software program to implement a baseband processing function.

In an example, an antenna and a control circuit that have receiving and sending functions may be considered as a transceiver unit 1001 of the terminal device 1000, and the processor having a processing function may be considered as a processing unit 1002 of the terminal device 1000. As shown in FIG. 10, the terminal device 1000 includes the transceiver unit 1001 and the processing unit 1002. The transceiver unit may also be referred to as a transceiver, a transceiver machine, a transceiver apparatus, or the like. Optionally, a component that is in the transceiver unit 1001 and that is configured to implement a receiving function may be considered as a receiving unit, and a component that is in the transceiver unit 1001 and that is configured to implement a sending function may be considered as a sending unit. In other words, the transceiver unit 1001 includes the receiving unit and the sending unit. For example, the receiving unit may also be referred to as a receiver, a receive machine, or a receiving circuit, and the sending unit may also be referred to as a transmitter, a transmit machine, or a transmitting circuit. Optionally, the receiving unit and the sending unit may be one integrated unit, or may be a plurality of independent units. The receiving unit and the sending unit may be in one geographical position, or may be distributed in a plurality of geographical positions.

In an embodiment, the processing unit 1002 is configured to perform an operation performed by the processing unit 702 in the foregoing embodiment, and the transceiver unit 1001 is configured to perform an operation performed by the transceiver unit 701 in the foregoing embodiment. The terminal device 1000 may be further configured to perform various methods performed by the terminal device in the foregoing method embodiments in FIG. 3 to FIG. 5A and FIG. 5B. Details are not described again.

An embodiment of this application further provides a computer-readable storage medium. The computer-readable storage medium stores a computer program. When the program is executed by a processor, a procedure related to the terminal in the communication method provided in the foregoing method embodiments may be implemented.

An embodiment of this application further provides a computer-readable storage medium. The computer-readable storage medium stores a computer program. When the program is executed by a processor, a procedure related to the network device in the communication method provided in the foregoing method embodiments may be implemented.

An embodiment of this application further provides a computer program product. When the computer program product runs on a computer or a processor, the computer or the processor is enabled to perform one or more steps in any one of the foregoing communication methods. When each of component modules of the foregoing device is implemented in a form of a software functional unit and is sold or used as an independent product, the component modules may be stored in the computer-readable storage medium.

An embodiment of this application further provides a chip system, including at least one processor and a communication interface. The communication interface and the at least one processor are interconnected through a line, and the at least one processor is configured to run a computer program or instructions, to perform some or all of the steps recorded in any one of the method embodiments corresponding to FIG. 3 to FIG. 5A and FIG. 5B. The chip system may include a chip, or may include a chip and another discrete component.

An embodiment of this application further discloses a communication system. The system includes one or more devices of a terminal device, an access network device, an SMF network element, and/or a UPF network element. For specific descriptions, refer to the communication methods shown in FIG. 3 to FIG. 5A and FIG. 5B.

It should be understood that the memory mentioned in embodiments of this application may be a volatile memory or a non-volatile memory, or may include both a volatile memory and a non-volatile memory. The non-volatile memory may be a hard disk drive (hard disk drive, HDD), a solid-state drive (solid-state drive, SSD), a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM), used as an external cache. By way of example but not limitative description, many forms of RAMs may be used, for example, a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchronous link dynamic random access memory (synchlink DRAM, SLDRAM), and a direct rambus random access memory (direct rambus RAM, DR RAM). The memory is any other medium that can carry or store expected program code in a form of an instruction or a data structure and that can be accessed by a computer, but is not limited thereto. The memory in embodiments of this application may alternatively be a circuit or any other apparatus that can implement a storage function, and is configured to store the program instructions and/or the data.

It should be further understood that, the processor mentioned in embodiments of this application may be a central processing unit (central processing unit, CPU), or may be another general-purpose processor, a digital signal processor (digital signal processor, DSP), an application-specific integrated circuit (application-specific integrated circuit, ASIC), a field programmable gate array (field programmable gate array, FPGA) or another programmable logic device, a discrete gate or a transistor logic device, a discrete hardware component, or the like. The general-purpose processor may be a microprocessor, or the processor may be any conventional processor or the like.

It should be noted that when the processor is a general purpose processor, a DSP, an ASIC, an FPGA or another programmable logic device, a discrete gate, a transistor logic device, or a discrete hardware component, the memory (a storage module) is integrated into the processor.

It should be noted that the memory described in this specification aims to include but is not limited to these memories and any memory of another proper type.

It should be understood that sequence numbers of the foregoing processes do not mean execution sequences in various embodiments of this application. The execution sequences of the processes should be determined based on functions and internal logic of the processes, and should not be construed as any limitation on the implementation processes of embodiments of this application.

A person of ordinary skill in the art may be aware that units and algorithm steps in the examples described with reference to embodiments provided in this specification may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and unit, refer to a corresponding process in the foregoing method embodiments. Details are not described herein again.

In the several embodiments provided in this application, it should be understood that the disclosed system, apparatus, and method may be implemented in other manners. For example, the described apparatus embodiments are merely examples. For example, division into the units is merely logical function division. There may be another division manner during actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Apart or all of the units may be selected based on actual requirements to achieve the objectives of the solutions of embodiments.

In addition, functional units in embodiments of this application may be integrated into one processing unit, each of the units may exist alone physically, or two or more units are integrated into one unit.

When the functions are implemented in the form of a software functional unit and sold or used as an independent product, the functions may be stored in a computer-readable storage medium. Based on such an understanding, the technical solutions of this application essentially, or the part contributing to a technology, or a part of the technical solutions may be implemented in the form of a software product. The computer software product is stored in a storage medium and includes several instructions for instructing a computer device (which may be a personal computer, a server, a network device, or the like) to perform all or a part of the steps of the methods described in embodiments of this application. The foregoing storage medium includes any medium that can store program code, such as a USB flash drive, a removable hard disk drive, a ROM, a RAM, a magnetic disk, or an optical disc.

A sequence of the steps of the method in embodiments of this application may be adjusted, combined, or removed based on an actual requirement.

The modules/units in the apparatuses in embodiments of this application may be combined, divided, and deleted based on an actual requirement.

In conclusion, the foregoing embodiments are merely intended for describing the technical solutions of this application, but not for limiting this application. Although this application is described in detail with reference to the foregoing embodiments, a person of ordinary skill in the art should understand that modifications may still be made to the technical solutions described in the foregoing embodiments or equivalent replacements may be made to some technical characteristics thereof. However, these modifications or replacements do not make essence of the corresponding technical solutions depart from the scope of the technical solutions in embodiments of this application.

## Claims

1. A communication method, comprising:
obtaining a security policy corresponding to a quality of service flow identifier QFI, wherein the security policy comprises an integrity protection policy and/or a confidentiality protection policy; and
performing, according to the security policy, security protection on a first data radio bearer DRB corresponding to the QFI.

2. The method according to claim 1, wherein the obtaining a security policy corresponding to a QFI comprises:
receiving the security policy corresponding to the QFI from a session management function network element.

3. The method according to claim 1, wherein the obtaining a security policy corresponding to a QFI comprises:
obtaining quality of service QoS attribute indication information corresponding to the QFI, wherein the QoS attribute indication information indicates quality of service guarantee used for a data flow;
obtaining the security policy corresponding to the QoS attribute indication information; and
determining, based on the QoS attribute indication information corresponding to the QFI and the security policy corresponding to the QoS attribute indication information, the security policy corresponding to the QFI.

4. The method according to any one of claims 1 to 3, wherein the method further comprises:
sending indication information to a terminal device according to the security policy, wherein the indication information indicates to perform security protection on the first DRB.

5. The method according to any one of claims 1 to 4, wherein the performing, according to the security policy, security protection on a first DRB corresponding to the QFI comprises:
receiving a first data packet from the terminal device on the first DRB; and
performing security protection on the first data packet according to the security policy.

6. The method according to claim 5, wherein the method further comprises:
determining the security policy based on the QFI comprised in the first data packet.

7. The method according to claim 5 or 6, wherein the method further comprises:
sending the first data packet to a user plane function network element through a QoS flow corresponding to the QFI.

8. The method according to any one of claims 1 to 7, wherein the performing, according to the security policy, security protection on a first DRB corresponding to the QFI comprises:
receiving a second data packet from the user plane function network element through the QoS flow corresponding to the QFI;
performing security protection on the second data packet according to the security policy; and
sending the second data packet to the terminal device on the first DRB.

9. The method according to claims 1 to 8, wherein the first DRB supports the security policy.

10. The method according to claim 9, wherein the method further comprises:
determining the first DRB from a created DRB, or creating the first DRB.

11. A communication method, comprising:
receiving indication information from an access network device, wherein the indication information indicates to perform security protection on a first data radio bearer DRB, and the security protection comprises integrity protection and/or confidentiality protection; and
performing security protection on the first DRB based on the indication information.

12. The method according to claim 11, wherein the performing security protection on the first DRB based on the indication information comprises:
performing security protection on a first data packet based on the indication information; and
sending, to the access network device on the first DRB, the first data packet on which the security protection is performed.

13. The method according to claim 11 or 12, wherein the performing security protection on the first DRB based on the indication information comprises:
receiving a second data packet from the access network device on the first DRB; and
performing security protection on the second data packet based on the indication information.

14. A communication method, comprising:
receiving a policy and charging control rule from a policy control function network element, wherein the policy and charging control rule comprises quality of service QoS attribute indication information and a security policy, and the security policy comprises an integrity protection policy and/or a confidentiality protection policy;
associating the policy and charging control rule with a QoS flow based on the QoS attribute indication information and the security policy; and
sending, to an access network device, the security policy corresponding to a QFI of the QoS flow.

15. The method according to claim 14, wherein the associating the policy and charging control rule with a QoS flow based on the QoS attribute indication information and the security policy comprises:
determining, from a created QoS flow, the QoS flow supporting the QoS attribute indication information and the security policy, or creating the QoS flow that supports the QoS attribute indication information and the security policy; and
associating the policy and charging control rule with the QoS flow.

16. A communication apparatus, comprising one or more functional units, configured to perform the communication method according to any one of claims 1 to 10;
the communication method according to any one of claims 11 to 13; or
the communication method according to either of claims 14 and 15.

17. A communication apparatus, comprising a processor, a memory, an input interface, and an output interface, wherein the input interface is configured to receive information from a communication apparatus other than the communication apparatus, and the output interface is configured to output information to the communication apparatus other than the communication apparatus; and when a computer program stored in the memory is invoked by the processor, the apparatus is enabled to perform the communication method according to any one of claims 1 to 10;
the communication method according to any one of claims 11 to 13; or
the communication method according to either of claims 14 and 15.

18. A computer-readable storage medium, wherein the computer-readable storage medium stores a computer program or computer instructions; and when the computer program or the computer instructions are executed by a processor, the communication method according to any one of claims 1 to 10 is implemented;
the communication method according to any one of claims 11 to 13 is implemented; or
the communication method according to either of claims 14 and 15 is implemented.

19. A computer program product comprising program instructions, wherein when the program instructions are run on a computer, the communication method according to any one of claims 1 to 10 is implemented;
the communication method according to any one of claims 11 to 13 is implemented; or
the communication method according to either of claims 14 and 15 is implemented.

20. A communication system, comprising one or more devices of a terminal device, an access network device, a session management function network element, and/or a user plane function network element.

21. A chip system, comprising at least one processor, a memory, and an interface circuit, wherein the memory, the interface circuit, and the at least one processor are interconnected through a line, and the at least one memory stores instructions; and when the instructions are executed by the processor, the communication method according to any one of claims 1 to 10 is implemented;
the communication method according to any one of claims 11 to 13 is implemented; or
the communication method according to either of claims 14 and 15 is implemented.
